# EUROPEAN PATENT SPECIFICATION

(11) **EP 4 136 497 B1**
(45) Date of publication and mention of the grant of the patent: **30.09.2026**
(21) Application number: 21721590.4
(22) Date of filing: 16.04.2021
(51) Int. Cl.: G02B 27/64

(54) **CAMERA ASSEMBLY**
KAMERAANORDNUNG
ENSEMBLE CAMÉRA

(30) Priority: 16.04.2020 GB 202005571; 10.07.2020 GB 202010709; 31.12.2020 GB 202020929
(43) Date of publication of application: 22.02.2023
(73) Proprietor: Cambridge Mechatronics Limited, Cambridge CB4 0WG (GB)
(72) Inventor: BROWN, Andrew Benjamin Simpson, Cambridge Cambridgeshire CB4 1YG (GB); SOUTH, Adam, Cambridge Cambridgeshire CB4 1YG (GB); HOWARTH, James, Cambridge Cambridgeshire CB4 1YG (GB); CARR, Joshua, Cambridge Cambridgeshire CB4 1YG (GB); EDDINGTON, Robin, Cambridge Cambridgeshire CB4 1YG (GB); BUNTING, Stephen, Cambridge Cambridgeshire CB4 1YG (GB)
(74) Representative: Cambridge Mechatronics Limited
(86) International application number: PCT/GB2021/050923
(87) International publication number: WO 2021/209770

(56) References cited:
- KR-A- 20150 127 792
- US-A1- 2013 002 933
- US-A1- 2013 156 412

## Description

### Field

The present application relates to a camera assembly.

### Background

An actuator assembly may be used, for example, in a camera to move a lens assembly in directions perpendicular to the optical axis so as to provide optical image stabilization (OIS). Where such a camera is to be incorporated into a portable electronic device such as a mobile telephone, miniaturization can be important.

WO 2013/175197 A1 describes an SMA actuation apparatus which moves a movable element relative to a support structure in two orthogonal directions using a total of four SMA actuator wires each connected at its ends between the movable element and the support structure and extending perpendicular to the primary axis. None of the SMA actuator wires are collinear, but the SMA actuator wires have an arrangement in which they are capable of being selectively driven to move the movable element relative to the support structure to any position in said range of movement without applying any net torque to the movable element in the plane of the two orthogonal directions around the primary axis.

WO 2019/243849 A1 describes a shape memory alloy actuation apparatus which comprises a support structure and a movable element. A helical bearing arrangement supported on the movable element on the support structure guides helical movement of the movable element with respect to the support structure around a helical axis. At least one shape memory alloy actuator wire is connected between the support structure and the movable element in, or at an acute angle to, a plane normal to the helical axis, so as to drive rotation of the movable element around the helical axis which the helical bearing arrangement converts into said helical movement.

WO 2019/086855 A1 describes a camera with an actuator assembly including a support platform, a moving platform that supports a lens assembly, SMA wires connected to the support platform and the moving platform, bearings to bear the moving platform on the support platform, and two arms extending between the support platform and the moving platform.

US 2013/156412 A1 discloses a camera assembly with a flexible printed circuit board connected to a tiltable camera module.

### Summary

According to an aspect of the present invention, there is provided a camera assembly comprising: a first part; a second part tiltable with respect to the first part, the second part including an image sensor and a lens system, wherein the lens system is above the image sensor with respect to a primary axis passing through the image sensor; a drive system configured, in response to drive signals, to cause tilting of the second part with respect to the first part, wherein the tilting is about first and/or second axes which are not parallel and which are perpendicular to the primary axis; and one or more flexible connectors operatively connected to the second part, wherein the one or more flexible connectors are routed to pass between the second part and the first part below the image sensor with respect to the primary axis.

A neutral axis of each flexible connector may pass through, or proximate to, the first axis and/or the second axis.

In this way, the flexible connectors may be located so as to minimise the mechanical influence of the flexible connector beam stiffness on tilting of the second part relative to the first part about the first and/or second axes.

Proximate to may correspond to a minimum perpendicular distance of less than or equal to 1 mm, less than or equal to 0.5 mm, or less than or equal to 0.25 mm. The minimum perpendicular distance may be between the neutral axis of a flexible connector and the first axis and/or the second axis.

The one or more flexible connectors may include, or take the form of, flexible printed circuits.

For at least a portion of each flexible connector, the normal(s) to a major surface of the flexible connector may be at an acute angle to the primary axis.

For at least a portion of each flexible connector, the flexible connector may not include a fold in which a normal to a major surface thereof is perpendicular to the primary axis.

The portion may correspond to the portion of the flexible connector in which the major surfaces thereof are not attached to any other part of the camera assembly.

The second part may include a first face and a second face opposite to the first face. The image sensor may be on the first face. Each flexible connector may at least partly span the second face. Hence each flexible connect may be described as being "behind" the second part. Each flexible connector may extend from the second part in a first direction and curve around to span across the second face in a second direction which is substantially opposite to the first direction.

Each flexible connector is routed so as to pass, with respect to the primary axis, at least partly above one or more lowest points of the envelope of motion of the second part relative to the first part.

The extremes of the range of motion may be defined by a maximum tilt of the second part relative to the first part in each direction within a plane containing the first and second axes. The second part may be square (or another type of polyhedron) and the lowest points of the envelope of motion of the second part are at one or more of its corners. When viewed along the primary axis, the flexible connector does not occupy corner regions of the second part. For instance, when viewed along the primary axis, the flexible connector may lie within a rectangular region spanning the second part.

Each flexible connector may be connected to the first part at a position outside the lateral extent of the second part when viewed along the primary axis.

The lens system may also include a lens carriage, a lens arrangement comprising at least one lens, and an autofocussing system mechanically coupling the lens arrangement and the lens carriages to move the lens arrangement relative to the sensor.

### Brief Description of the Drawings

Certain embodiments of the present invention will now be described, by way of example only, with reference to the accompanying drawings, in which:
Figure 1 is a schematic diagram of a camera incorporating a shape memory alloys (SMA) actuator assembly;
Figure 2 schematically illustrates possible degrees of freedom which may be provided by an SMA actuator assembly;
Figure 3 is a schematic plan view of a first type of drive arrangement which may be used in an SMA actuator assembly;
Figure 4 is a perspective view of a first SMA actuator assembly employing the first type of drive arrangement shown in Figure 3;
Figure 5A is a schematic plan view of a second type of drive arrangement which may be used in an SMA actuator assembly;
Figures 5B and 5B are schematic side and end views of the second type of drive arrangement shown in Figure 5A;
Figure 6 is a schematic side view of a two-bar link bearing;
Figure 7A is a plan view of a first two-by-two parallel bar link bearing (or "simple flexure");
Figure 7B is a side view of the simple flexure shown in Figure 7A;
Figure 8 is a plan view of a second simple flexure;
Figure 9 is an exploded projection of a z-flexure;
Figure 10 is a projection of a first pivot bearing;
Figure 11A is a side view of the first pivot bearing shown in Figure 10;
Figure 11B is a side view of a second pivot bearing;
Figure 11C is a side view of the third pivot bearing;
Figure 11D is a side view of the fourth pivot bearing;
Figure 12A is a side view of a first planar bearing;
Figure 12B is an exploded projection view of the first planar bearing shown in Figure 12A;
Figure 13 is a side view of a second planar bearing;
Figure 14 is a plan view of a first gimbal bearing;
Figure 15 is a plan view of a second gimbal bearing;
Figure 16A is a plan view of a third gimbal bearing;
Figure 16B is a cross-section along the line labelled A-A' in Figure 16A;
Figure 16C is a cross-section along the line labelled B-B' in Figure 16A;
Figure 17A is a plan view of a first tilting rolling bearing;
Figure 17B is a cross-section along the line labelled C-C' in Figure 17A;
Figure 18A is a plan view of a first tilting rolling bearing;
Figure 18B is a cross-section along the line labelled D-D' in Figure 18A;
Figure 19 is a cross section of a modified first tilting rolling bearing along an equivalent plane to that shown in Figure 17B;
Figure 20 is a cross section of a third tilting rolling bearing;
Figure 21 is a schematic exploded projection of a first actuator assembly;
Figure 22 is a schematic projection of the first actuator assembly shown in Figure 21;
Figure 23 is schematic block diagram of the first actuator assembly shown in Figure 21;
Figure 24 is a schematic plan view of the first actuator assembly shown in Figure 21;
Figure 25 is a schematic cross-sectional view of the first actuator assembly shown in Figure 24 taken along the line D-D';
Figure 26 schematically illustrates tilting of first plane in which a platform lies and tilting of a second plane in which a second part lies;
Figure 27 is a schematic bottom view of an alternative 4 shape memory alloy wire arrangement;
Figure 28 is a schematic projection of a second actuator assembly;
Figure 29 is a schematic exploded projection of a second actuator assembly;
Figure 30 is a schematic cross-sectional view of a first pivot;
Figure 31 is a schematic cross-sectional view of a second pivot;
Figure 32 is a schematic cross-sectional view of a third pivot;
Figure 33 is a schematic projection of a third actuator assembly;
Figure 34 is a schematic cross-sectional view of the third actuator assembly shown in Figure 33;
Figure 35 is a schematic block diagram of the third actuator assembly shown in Figure 33;
Figure 36 is schematic exploded projection of a variant of the third actuator assembly;
Figure 37 is a cross section of a fourth actuator assembly;
Figure 38 is a cross section of the fourth actuator assembly through a plane perpendicular to that shown in Figure 37;
Figure 39 is a cross section of the third actuator assembly shown in Figure 33, modified to use a flexible electrical connector routing configuration shown in Figures 37 and 38;
Figure 40 is a projection view of a camera apparatus with a flexible electrical connector routing configuration as shown in Figures 37 and 38, before folding of the flexible electrical connector;
Figure 41 is a projection view of the camera apparatus shown in Figure 40, after folding of the flexible electrical connector;
Figure 42 is a cross section of the third actuator assembly shown in Figure 33, modified to use a flexure arms shown in Figure 43 for electrical connections between first and second parts;
Figure 43 is a plan view of a portion of the actuator assembly shown in Figure 42 from below, illustrating a layout of flexure arms;
Figure 44 is a plan view of a portion of the actuator assembly shown in Figure 42 from below, illustrating an alternative layout of flexure arms; and
Figure 45 is a cross section of a modified version of the actuator assembly shown in Figure 42.

### Detailed Description

### Camera

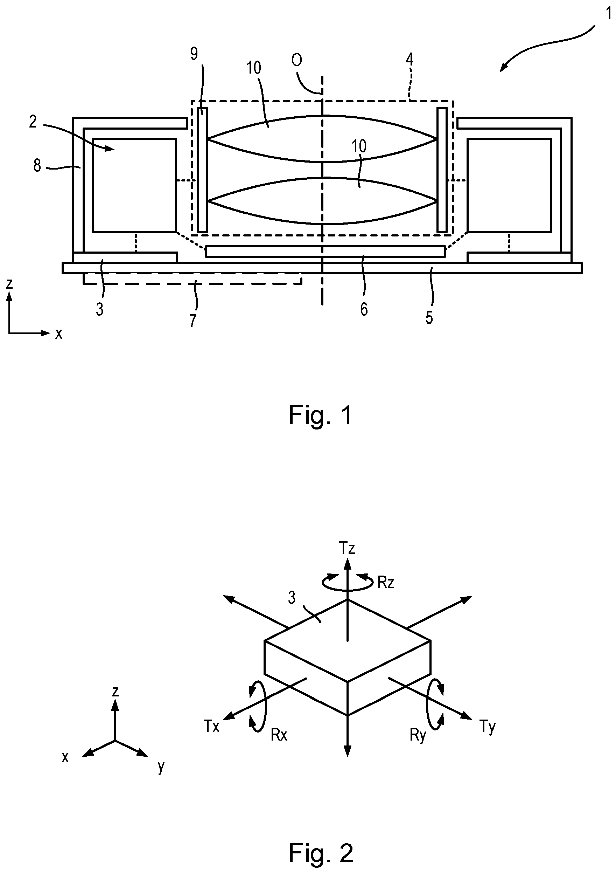

Referring to Figure 1, a camera 1 incorporating an SMA actuator assembly 2 (herein also referred to as an "SMA actuator" or simply an "actuator") is shown.

The camera 1 includes first and second parts 3, 4.

The first part 3 of the camera takes the form of a support structure and includes a base 5. The second part 4 of the camera takes the form a lens assembly suspended on the first part 3 of the camera 1 by the SMA actuator assembly 2.

An image sensor 6 is disposed in front of a front side of the base 5, i.e., the image sensor 6 is interposed between the lens assembly 4 and the base 5.

The SMA actuator assembly 2 supports the lens assembly 4 and the image sensor 6 in a manner allowing one or more degrees-of-freedom of the lens assembly 4 relative to the support structure 3. The lens assembly 4 has an optical axis O.

The camera 1 includes an integrated circuit (IC) 7, which implements a control circuit, and also a gyroscope sensor (not shown). The support structure 3 also includes a can 8 which protrudes forwardly from the base 5 to encase and protect the other components of the camera 1.

The lens assembly 4 includes a lens carriage 9 in the form of a cylindrical body supporting two lenses 10 arranged along the optical axis O. In general, any number of one or more lenses 10 may be included. Preferably, each lens 10 has a diameter of up to about 20 mm. The camera 1 can therefore be referred to as a miniature camera.

The lens assembly 4 is arranged to focus an image onto the image sensor 6. The image sensor 6 captures the image and may be of any suitable type, for example, a charge-coupled device (CCD) or a complementary metal-oxide-semiconductor (CMOS) device.

The lenses 10 are supported on the lens carriage 9 and the lens carriage 9 is supported by the SMA actuator assembly 2 such that the lens assembly 4 is movable along the optical axis O relative to the support structure 3, for example to provide focussing or zoom. Although all the lenses 10 are fixed to the lens carriage 9 in this example, in general, one or more of the lenses 10 may be mounted to a component other than the lens carriage 9, and may be fixed in place relative to the image sensor 6, leaving at least one of the lenses 10 attached to the lens carriage and movable along the optical axis O relative to the image sensor 6.

In general, the lens assembly 4 may be moved orthogonally to the optical axis O in use, relative to the image sensor 6, with the effect that the image on the image sensor 6 is moved. For example, if a set of right-handed orthogonal axes x, y, z is aligned so that a third axis z is oriented substantially parallel to the optical axis O, then the lens assembly 4 may be moveable in a direction parallel to the first x axis and/or in a direction parallel to the second y axis. This is used to provide optical image stabilization (OIS), compensating for movement of the camera 1, which may be caused by hand shake etc. The movement providing OIS need not be constrained to the x-y plane. Additionally or alternatively, OIS functionality may be provided by tilting the lens assembly 4, or both the lens assembly 4 and the image sensor 6, about an axis parallel to the first axis x and/or about an axis parallel to the second y axis. Additionally, the lens assembly 4, or at least one lens 10 thereof, may be moved parallel to the optical axis O (parallel to the third axis z) to provide focussing of an image formed on the image sensor 6, for example as part of an automatic focussing (AF) function.

This specification is concerned with examples of SMA actuator assemblies 2 which provide optical image stabilisation (OIS) that is based on tilting the lens assembly 4 and the image sensor 6 relative to the support structure 3. Automatic focussing (AF) may be provided by an additional system which may or may not use SMA wires.

### Degrees of freedom

Referring also to Figure 2, possible types of movement (or degrees of freedom) which may be provided by an SMA actuator assembly 2 are illustrated.

A first degree-of-freedom (DOF) Tx corresponds to movement parallel to the first axis x. A second DOF Ty corresponds to movement parallel to the second axis y. A third DOF Tz corresponds to movement parallel to the third axis z, which is oriented substantially parallel to the optical axis O. The third DOF Tz corresponds to movement of the lens assembly 3 towards or away from the image sensor 6. The first, second and third axes x, y, z form a right-handed Cartesian coordinate system. A fourth DOF Rx corresponds to rotation about an axis parallel to the first axis x. A fifth DOF Ry corresponds to rotation about an axis parallel to the second axis y. A sixth DOF Rz corresponds to rotation about an axis parallel to the third axis z. In some examples, one or more of the axes may be attached to (and move and/or rotate/tilt with) a first part, a second part, or any other elements of an SMA actuator assembly 2 or camera 1. For example, an origin may be an element of the camera 1 such as the image sensor 6 or a lens 10 of the lens assembly 4.

Motions of the lens assembly 4 relative to the support structure 3 may be broken down into components of any or all of the first to sixth DOF (movements) Tx, Ty, Tz, Rx, Ry, Rz. Although described as degrees-of-freedom, in some cases translations and rotations may be linked. For example, a given translation Tz along the third axis z may be tied to a corresponding rotation Rz so that motion of the lens assembly 4 is helical. Such linked motions may be referred to using a pair enclosed in square brackets to avoid confusion with more independent motions, for example [Tz, Rz] will denote a helical motion described hereinafter.

This specification concerns SMA actuator assemblies which provide the motions corresponding to the fourth and fifth DOF Rx, Ry. The fourth and fifth DOF Rx, Ry provide the OIS functionality herein. Other motions are constrained by the SMA actuator assemblies 2 as described herein.

### Shape-memory alloy drive assemblies

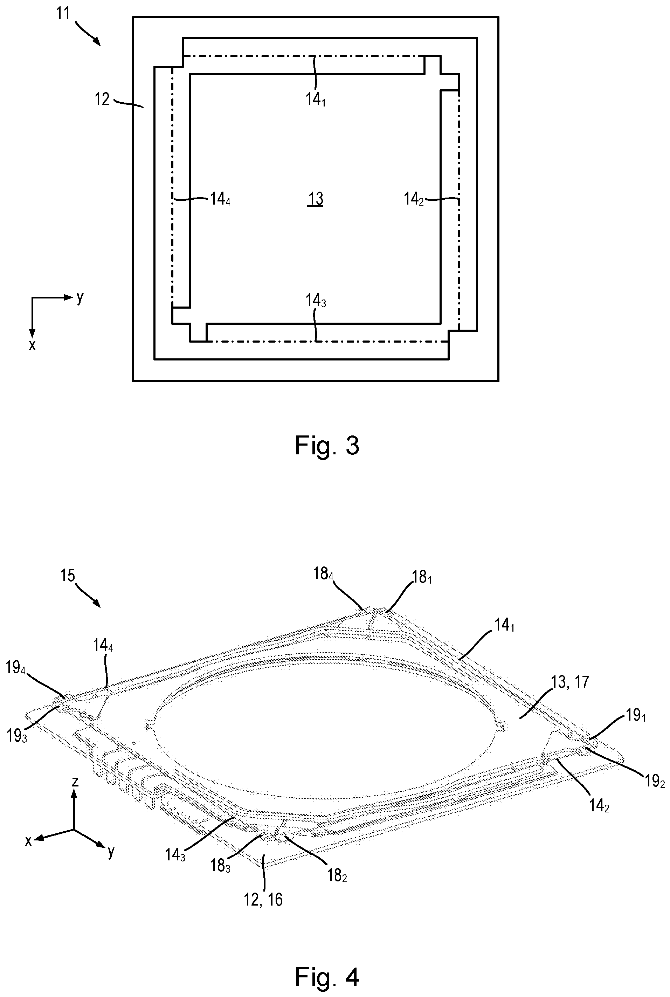

Referring also to Figure 3, a first type of drive arrangement 11 which may be included in SMA actuator assemblies herein described is shown schematically.

The first drive arrangement 11 includes a first structure 12 and a second structure 13. The second structure 13 is generally supported within a boundary defined by the first structure 12, for example using one or more bearings as described hereinafter. The second structure 12 generally need not provide a complete or uninterrupted boundary. The first and second structures 12, 13 may take the form of respective patterned sheets of metal, e.g., etched or machined stainless steel, and may be coated with an electrically-insulating dielectric material.

Four SMA wires 14₁, 14₂, 14₃, 14₄ (shown in chain to aid visibility) form a loop around the second structure 13. First 14₁ and third 14₃ SMA wires extend substantially parallel to the first axis x and are spaced apart in a direction parallel to the second axis y. Contraction of the first SMA wire 14₁ will exert a force on the second structure 13 in the negative -x direction, whereas contraction of the third SMA wire 14₃ will exert a force on the second structure 13 in the positive +x direction. Second 14₂ and fourth 14₄ SMA wires extend substantially parallel to the second axis y and are spaced apart in a direction parallel to the first axis x. Contraction of the second SMA wire 14₂ will exert a force on the second structure 13 in the negative -y direction, whereas contraction of the fourth SMA wire 14₄ will exert a force on the second structure 13 in the positive +y direction.

Other examples configurations may be used, and further details are provided in WO 2017/055788 A1 and WO 2019/086855 A1.

The position of the second structure 13 relative to the first structure 12 perpendicular to the optical axis O is controlled by selectively varying the temperatures of the SMA wires 14₁, 14₂, 14₃, 14₄. This is achieved by passing selective drive signals through the SMA wires 14₁, 14₂, 14₃, 14₄ that provide resistive heating. Heating is provided directly by the drive current. Cooling is provided by reducing or ceasing the drive current to allow the SMA wires 14₁, 14₂, 14₃, 14₄ to cool by conduction, convection and radiation to its surroundings.

In operation, the SMA wires 14₁, 14₂, 14₃, 14₄ are selectively driven to move the second structure 13 relative to the first structure 12 (or vice versa) in any lateral direction (i.e., a direction within a plane parallel to first and second axes x, y and perpendicular to the optical axis O and third axis z).

Further details are also provided in WO 2013/175197 A1.

Taking the example of the set of four SMA wires 14₁, 14₂, 14₃, 14₄, the SMA wires 14₁, 14₂, 14₃, 14₄ have an arrangement in a loop at different angular positions around the optical axis O (corresponding here to the third axis z) to provide two pairs of opposed SMA wires 14₁ & 14₃, 14₂ & 14₄ that are substantially perpendicular to each other. Thus, each pair of opposed SMA wires 14₁ & 14₃, 14₂ & 14₄ is capable on selective driving of moving the second structure 13 in one of two perpendicular directions orthogonal to the optical axis O. As a result, the SMA wires 14₁, 14₂, 14₃, 14₄ are capable of being selectively driven to move the second structure 13 relative to the first structure 12 to any position in a range of movement in a plane orthogonal to the optical axis O. Another way to view this movement is that contraction of any pair of adjacent SMA wires (e.g. SMA wires 14₃, 14₄) will move the second structure 13 in a direction bisecting the pair of SMA actuator wires (diagonally in Fig. 3). Moreover, the SMA wires 14₁, 14₂, 14₃, 14₄ are capable of being actuated to generate torque about an axis parallel to the primary axis z. In particular, contraction of one pair of opposite SMA wires (e.g. SMA wires 14₁, 14ₛ) will produce a torque on the second structure 13 in one sense about an axis parallel to the primary axis z, and contraction of the other pair of opposite SMA wires (e.g. SMA wires 14₂, 14₄) will produce a torque in the other sense. The generation of torque and a resulting rotation may be substantially independent of the translations along directions parallel to the first and/or second axes x, y, at least over a part of the range of motion of the drive arrangement 11. The magnitude of the range of movement depends on the geometry and the range of contraction of the SMA wires 14₁, 14₂, 14₃, 14₄ within their normal operating parameters.

On heating of one of the SMA wires 14₁, 14₂, 14₃, 14₄, the stress in the SMA wire 14₁, 14₂, 14₃, 14₄ increases and it contracts, causing movement of the second structure 13 relative to the first structure 12. A range of movement occurs as the temperature of the SMA increases over a range of temperature in which there occurs the transition of the SMA material from the Martensitic phase to the Austenitic phase. Conversely, on cooling of one of the SMA wires 14₁, 14₂, 14₃, 14ₐ so that the stress in the SMA wire 14₁, 14₂, 14₃, 14₄ decreases, it expands under the force from opposing ones of the SMA wires 14₁, 14₂, 14₃, 14₄ (and in some examples also biasing forces from one or more biasing means such as springs, armatures and so forth). This allows the second structure 13 to move in the opposite direction relative to the first structure 12.

The SMA wires 14₁, 14₂, 14₃, 14₄ may be made of any suitable SMA material, for example Nitinol or another titanium-alloy SMA material.

The drive signals for the SMA wires 14₁, 14₂, 14₃, 14₄ are generated and supplied by the control circuit implemented in the IC 7. For example, if the first structure 12 is fixed to (or part of) the support structure 3 and the second structure 13 is fixed to (or part or) the lens assembly 4, then the drive signals are generated by the control circuit in response to output signals of the gyroscope sensor (not shown) so as to drive movement of the lens assembly 4 to stabilise an image focused by the lens assembly 4 on the image sensor 6, thereby providing OIS. The drive signals may be generated using a resistance feedback control technique, for example as described in WO 2014/076462 A1.

Referring also to Figure 4, an example of a "flat" SMA actuator assembly 15 implementing the first drive arrangement 11 is shown.

In the flat actuator assembly 15, the first structure 12 takes the form of a flat, annular plate 16 having a rectangular outer perimeter (or "outer edge") and a circular inner perimeter (or "inner edge"), whilst the second structure 13 takes the form of a flat, thin annular sheet 17 with a rectangular outer perimeter and a circular inner perimeter. The first structure 12 in the form of the plate 16 is supported on a base 5 in the form of a rectangular plate. The four SMA wires 14₁, 14₂, 14₃, 14₄ are each attached at one end to respective first crimps 18₁, 18₂, 18₃, 18₄ (also referred to as "static" crimps) which are fixedly attached to (or formed as part of) the first structure 12, 16. The other end of each SMA wire 14₁, 14₂, 14₃, 14₄ is attached to a respective second crimp 19₁, 19₂, 19₃, 19₄ (also referred to as a "moving" crimp) which is fixedly attached to (or formed as part of) the second structure 13, 17.

The plate 16 and the sheet 17 may each take the form of respective patterned sheets of metal, e.g., etched or machined stainless steel, and may be coated with an electrically-insulating dielectric material. The plate 16 and the sheet 17 are each provided with a respective central aperture aligned with the optical axis O allowing the passage of light from a lens assembly 4 mounted to the sheet 17 to an image sensor 6 supported on the base 5 (not shown in Figure 4 - see Figure 1).

The four SMA wires 14₁, 14₂, 14₃, 14₄ may be perpendicular to the optical axis O or inclined at a small angle to a plane perpendicular to the optical axis O. Generally, in a set, the four SMA wires 14₁, 14₂, 14₃, 14₄ are non-collinear.

The flat actuator assembly 15 includes a number of plain bearings (not shown in Figure 4) spaced around the optical axis O to bear the second structure 13, 17 on the first structure 12, 16. Preferably, at least three bearings are used in order to assist in providing stable support, although in general, a different number of bearings may be used. Each plain bearing (not shown in Figure 4) may take the form of a bearing member in the form of cylinder, and may be attached to, or formed as part of, the first structure 12. The plain bearings (not shown in Figure 4) may be made from a suitable metal or alloy such as phosphor bronze or stainless steel with a diamond-like carbon coating. The plain bearings (not shown in Figure 4) may be made from, or may include an upper layer coating of, a polymer, such as Polyoxymethylene (POM, Acetal), Polytetrafluoroethylene (PTFE) or PTFE-impregnated POM.

The flat actuator assembly 15 will generally also include biasing means (not shown) such as one or more springs or flexure arms arranged and configured to maintain the first and second structures 12, 13 in contact (via the plain bearings)and/or to urge the first and second structures 12, 13 towards a neutral (for example central) relative position when the SMA wires 14₁, 14₂, 14₃, 14₄ are not powered.

Details relevant to manufacturing actuator assemblies similar to the flat actuator assembly 15 can be found in WO 2016/189314 A1.

Although not shown in Figure 4, the flat actuator assembly 15 may be provided with end stops to provide limits on lateral movement of the second structure 13 relative to the first structure 12. In this way, the SMA wires 14₁, 14₂, 14₃, 14₄ can be protected from overextension resulting from, for example, impacts to which a device (not shown) incorporating the flat actuator assembly 15 may be subjected (for example being dropped).

The first drive arrangement 11 can drive translations Tx, Ty along to first and/or second axes x, y and rotations Rz about an axis parallel to the third axis z (which is substantially parallel to the optical axis O). However, in order to provide translation Tz parallel to the third axis z, the first drive arrangement 11 must be combined with at least one bearing capable of converting a torque applied about the optical axis O into a combination of rotation Rz and translation Tz (a helical movement).

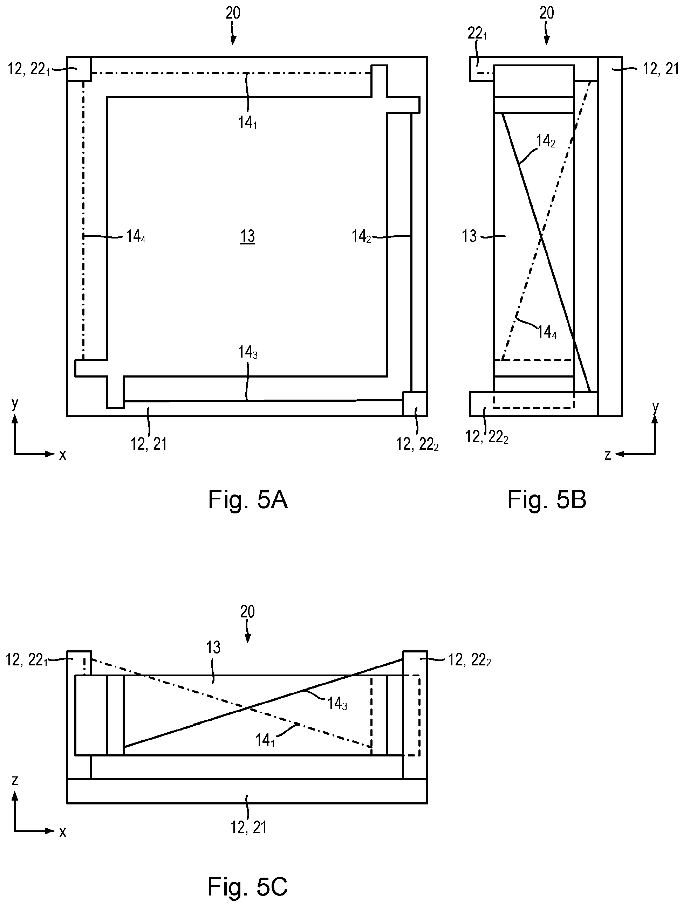

Referring also to Figures 5A to 5C, a second type of drive arrangement 20 which may be included in SMA actuator assemblies herein described is shown schematically.

The second drive arrangement 20 is similar to the first drive arrangement 11 except that the first structure 12 includes a base 21 and a pair of first and second upstanding pillars 22₁, 22₂, and that the SMA wires 14₁, 14₂, 14₃, 14₄ are not substantially confined to a plane perpendicular to the third axis z.

Figure 5A shows the second drive arrangement 20 viewed from above, along a direction parallel to the third axis z.

Figure 5B shows the second drive arrangement 20 viewed from the side, along a direction parallel to the first axis x. Note that the fourth SMA wire 14₄ has been superimposed on Figure 5B for visual purposes, even though the fourth SMA wire 14₄ would be largely obscured behind the second structure 13.

Figure 5C shows the second drive arrangement 20 viewed from the side, along a direction parallel to the second axis y. Note that the first SMA wire 14₁ has been superimposed on Figure 5B for visual purposes, even though the first SMA wire 14₁ would be largely obscured behind the second structure 13.

The base 21 extends beyond the edges of the second structure 13 when viewed along the third axis (Figure 5A), and in this example is rectangular (or square). The first pillar 22₁ is upstanding from a first corner of the base 21, and the second pillar 22₂ is upstanding from a second corner, diagonally opposite across the second structure 13.

The first SMA wire 14₁ connects from a lower portion (lower along the z axis) of the second structure 13 to an upper portion (higher along the z axis) of the first pillar 22₁. The second SMA wire 14₂ connects from an upper portion of the second structure 13 to a lower portion of the second pillar 22₂. The third SMA wire 14₃ connects from a lower portion of the second structure 13 to an upper portion of the second pillar 22₂. The fourth SMA wire 14₂ connects from an upper portion of the second structure 13 to a lower portion of the first pillar 22₁.

In this way, the first SMA wire 14₁ opposes the third SMA wire 14₃ in a direction parallel to the first axis x, the second SMA wire 14₂ opposes the fourth SMA wire 14₄ in a direction parallel to the second axis y, and the first and third SMA wires 14₁, 14₃ oppose the second and fourth SMA wires 14₂, 14₄ in a direction parallel to the third axis z.

In this way, the second drive arrangement 20, using four angled (non-coplanar) SMA wires 14₁, 14₂, 14₃, 14₄, may provide drive corresponding to Tx, Ty, Tz, Rx, Ry, Rz motions. The motions are not fully independent degrees of freedom, and in general translations will be linked to rotations, for example [Tx, Rx], [Ty, Ry] and [Tz, Rz], with the specific couplings depending on the angles of the SMA wires 14₁, 14₂, 14₃, 14₄.

The SMA wires 14₁, 14₂, 14₃, 14₄ are preferably inclined at an angle of between 10 and 25° relative to a plane perpendicular to the primary axis z.

Either or both of the first structure 12, 21 and the second structure 13 may include central apertures to permit light from a lens assembly 4 to form an image on an image sensor 6.
One or more of the motions driven by the first or second drive arrangements 11, 20 may be fully or partly constrained by coupling one or more bearings between the first and second structures 12, 13.

### Bearings

In general, an SMA actuator according to this specification will include at least one of the first and second drive arrangements 11, 20 and also an arrangement of one or more mechanical bearings (also referred to as a "bearing arrangement") serving to support, constrain and/or convert the movements generated by the first or second drive arrangement 11, 20.

### -Two-bar link bearing-

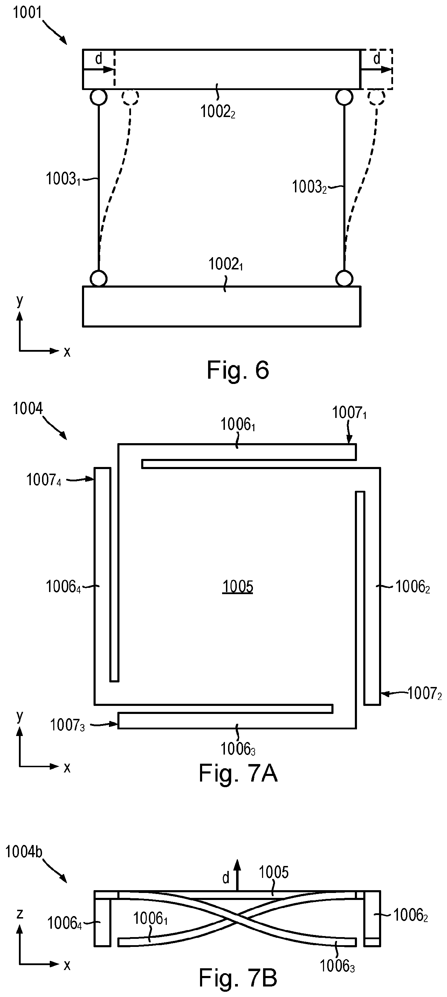

Referring also to Figure 6, a two-bar link bearing 1001 is shown.

The two-bar link bearing 1001 includes first and second rigid portions 1002₁, 1002₂ connected by first and second beam portions 1003₁, 1003₂ (also referred to as flexures) The rigid portions 1002₁, 1002₂ are each elongated in a direction parallel to the first axis x, and are spaced apart from one another in a direction parallel to the second axis y. The beam portions 1003₁, 1003₂ are each elongated in a direction parallel to the second axis y, and are spaced apart from one another in a direction parallel to the first axis x. The beam portions 1003₁, 1003₂ are shown as being perpendicular to the rigid portions 1002₁, 1002₂, however this is not essential and any angle will work provided that the beam portions 1003₁, 1003₂ are parallel to one another. The beam portions 1003₁, 1003₂ are unable to rotate about the joints with the rigid portions 1002₁, 1002₂, for example the connections are not pinjointed or similar.

The relative flexural rigidities of the beam portions 1003₁, 1003₂ and the rigid portions 1002₁, 1002₂ are selected (primarily using the dimensions and shapes of cross-sections) so that if the first rigid portion 1002₁ is clamped, the second rigid portion 1002₂ may move relative to the first rigid portion 1002₁ via bending of the beam portions 1003₁, 1003₂ in the x-y and/or x-z planes. In this way, the two-bar link 1001 is able to provide for relative movements Tx, Tz, Rx and/or Ry for relative motion between the first and second rigid portions 1002₁, 1002₂. A deformed state in which the second rigid portion 1002₂ is displaced by a distance d parallel to the first axis is also shown in Figure 6 using dashed lines. The two-bar link bearing 1001 may be rotated 90 degrees to provide movement Ty parallel to the second axis y instead of Tx.

The relative resistance to bending in x-y versus y-z planes may be controlled by using the cross-sectional shape of the beam portions 1003₁, 1003₂ to select relative flexural rigidities.

### - Simple flexure -

Referring also to Figure 7A, a tiltable z-flexure in the form of a two-by-two parallel bar link bearing 1004 (also referred to as a simple flexure) is shown.

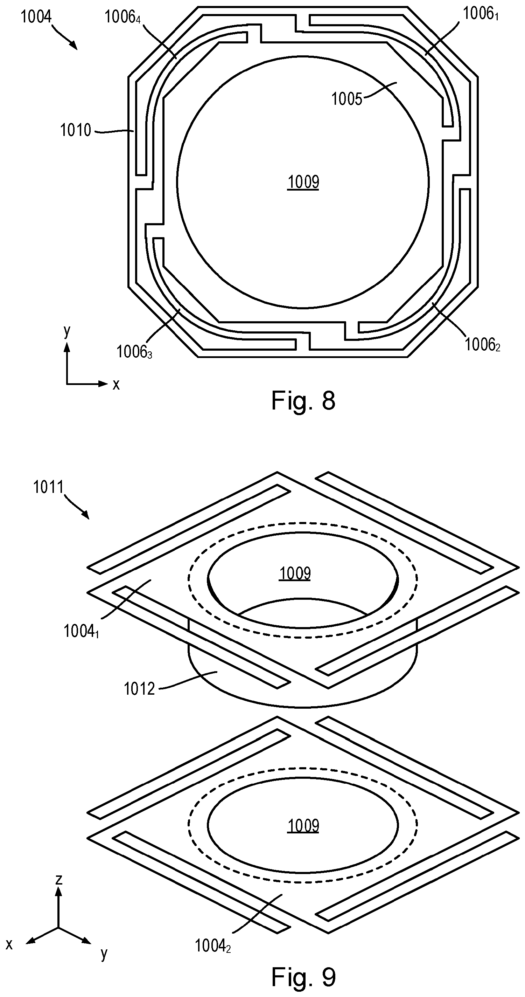

The simple flexure 1004 includes a central portion 1005 and two pairs of beam portions (or flexures) 1006₁, 1006₂, 1006₃, 1006₄. Each beam portion (or flexure) 1006₁, 1006₂, 1006₃, 1006₄ is rigidly connected to the central portion 1005 at one end, and has a second, free end 1007₁, 1007₂, 1007₃, 1007₄. In some examples the central portion 1005 may also have a central aperture 1009 (Figure 8). The first and third beam portions (flexures) 1006₁, 1006₃ are elongated in a direction parallel to the first axis x, and are able to deform, for example, by beam bending in the x-z plane. Similarly, the second and fourth beam portions (flexures) 1006₂, 1006₄ are elongated in a direction parallel to the second axis y, and are able to deform, for example, by beam bending in the y-z plane. Deflection of beam portions (or flexures) 1006₁, 1006₂, 1006₃, 1006₄ laterally (perpendicular to the third axis z) is constrained by the connection of all the beam portions (or flexures) 1006₁, 1006₂, 1006₃, 1006₄ to the central portion 1005 and/or by the cross-sectional shapes of the beam portions 1006₁, 1006₂, 1006₃, 1006₄.

In this way, if the free ends 1007 are clamped, the simple flexure 1004 is able to provide for relative movements Tz, Rx and/or Ry between the central portion 1005 and the clamped free ends 1007.

Referring also to Figure 7B, a deformed state 1004b of the simple flexure of Figure 7A is shown in which the central portion 1005 is displaced by a distance d parallel to the third axis z.

Referring also to Figure 8, a second simple flexure ("tiltable z-flexure") 1008 is shown.

The second simple flexure 1008 is the same as the simple flexure 1004, except that the central portion 1005 includes a central aperture 1009, that the ends of the beam portions 1006₁, 1006₂, 1006₃, 1006₄ not connected to the central portion 1005 are connected to an outer annulus 1010, and that the beam portions 1006₁, 1006₂, 1006₃, 1006₄ are curved instead of straight. The second simple flexure 1008 functions in substantially the same way as the simple flexure 1004. In particular, if the outer annulus is clamped, then the central portion 1005 may move in Tz, Rx and/or Ry.

The presence or absence of a central aperture 1009 in the second simple flexure 1008 or the simple flexure 1004 may depend on the position within a device, for example the camera 1. A simple flexure 1004, 1008 located below the image sensor 6 will not generally require a central aperture 1009, whereas a simple flexure 1004, 1008 located above the image sensor 6 will generally require a central aperture 1009.

### - Z-flexure -

Referring also to Figure 9, a z-flexure 1011 is shown.

The z-flexure includes a pair of simple flexures 1004₁, 1004₂ disposed perpendicular to the third axis z (when not deformed), and spaced apart in a direction parallel to the third axis z by a rigid structure 1012 sandwiched between the pair of simple flexures 1004₁, 1004₂. The simple flexures 1004₁, 1004₂ are fixed to opposed faces of the rigid structure 1012. The simple flexures 1004₁, 1004₂ each include a central aperture 1009. The illustration in Figure 9 shows the rigid structure 1012 fixed to one of the simple flexures 1004₁ and detached from the other simple flexure 1004₂ for visual purposes, though in use both simple flexures 1004₁, 1004₂ are fixed to the rigid structure 1012. Dashed lines in Figure 9 illustrate the projected outline of the rigid structure 1012.

In this way, each individual beam portion 1006 of each simple flexure 1004₁, 1004₂ may deflect. However, the separation of the simple flexures 1004₁, 1004₂ parallel to the third axis z and the fixed connection via the rigid structure 1012 constrains movements Tz, Rx, Ry except movement Tz parallel to the third axis z.

In this example the rigid structure 1012 is a hollow cylinder having an inner diameter equal to the diameter of the central apertures 1009. However, the rigid structure 1012 may have any shape suitable for spacing the simple flexures apart parallel to the third direction z and compatible with an intended application of an actuator.

### - Pivot bearing -

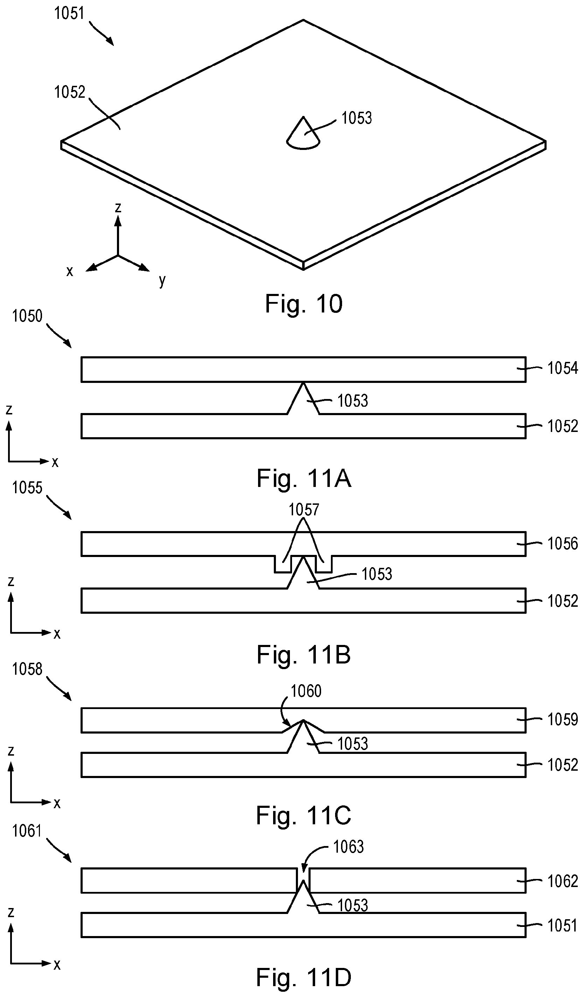

Referring also to Figures 10 and 11A, a first pivot bearing 1050 is shown.

Figure 10 shows a projection view of a first plate 1051 of the first pivot bearing 1050, and Figure 11A shows a side view of the first pivot bearing 1050.

The first plate 1051 includes a rectangular base plate 1052 extending parallel to first and second axes x, y from which a conical protrusion 1053 is upstanding in a direction parallel to the third axis z. The conical protrusion 1053 is illustrated as being central to the base plate 1052, but in practice this is not necessary and the conical protrusion 1053 is placed wherever the origin of pivoting is required for a particular application. The first pivot bearing 1050 is completed by a second plate 1054 contacting the conical protrusion 1053. Biasing means (not shown) urge the first and second plates 1051, 1054 together to maintain contact between the conical protrusion 1053 and the second plate 1054. The second plate 1054 may slide relative to the conical protrusion 1053 parallel to the first and/or second axes x, y, and may rotate (tilt) about any axis x, y, z with an origin provided by a point of the conical protrusion.

In this way, the relative motions between the first plate 1051 and the second plate 1054 correspond to Tx, Ty, Rx, Ry and Rz, whilst constraining movement Tz parallel to the third axis z.

A conical protrusion 1053 is not essential, and any shape of protrusion suitable to provide a pivot point may be used instead.

Referring also to Figure 11B, a side view of a second pivot bearing 1055 is shown.

The second pivot bearing 1055 includes the first plate 1051, but replaces the second plate 1054 with a third plate 1056. The third plate 1056 includes an annular protrusion 1057 which defines a recess that receives the point of the conical protrusion 1053. The annular protrusion 1057 constrains lateral sliding of the third plate 1056 relative to the first plate 1051. In this way, the relative motions between the first plate 1051 and the third plate 1056 correspond to Rx, Ry and Rz, whilst constraining movements Tx, Ty and Tz.

Referring also to Figure 11C, a side view of a third pivot bearing 1058 is shown.

The third pivot bearing 1058 includes the first plate 1051, but replaces the second plate 1054 with a fourth plate 1059. The fourth plate 1059 includes a conical indentation 1060 which defines a recess that receives the point of the conical protrusion 1053. The conical indentation 1060 constrains lateral sliding of the fourth plate 1059 relative to the first plate 1051. In this way, the relative motions between the first plate 1051 and the fourth plate 1059 correspond to Rx, Ry and Rz DOF, whilst constraining movements Tx, Ty and Tz.

Referring also to Figure 11D, a side view of a fourth pivot bearing 1061 is shown.

The fourth pivot bearing 1061 includes the first plate 1051, but replaces the second plate 1054 with a fifth plate 1062. The fifth plate 1062 includes through-hole 1063 that receives the point of the conical protrusion 1053. The through-hole 1063 constrains lateral sliding of the fifth plate 1061 relative to the first plate 1051. In this way, the relative motions between the first plate 1051 and the fifth plate 1062 correspond to Rx, Ry and Rz, whilst constraining movements Tx, Ty and Tz. The fifth plate 1062 may be relatively simpler to fabricate compared to the third or fourth plates 1056, 1059.

The pivot bearings 1050, 1055, 1058, 1061 may be inverted. Thus, the conical (or other shaped) protrusion 1053 may depend from the (upper) plate 1054, 1056, 1059, 1062 and, if present, the facing protrusion 1057, indentation 160 or recess 1063 may be provided in the (lower) plate 1051, 1052.

### - Planar bearing -

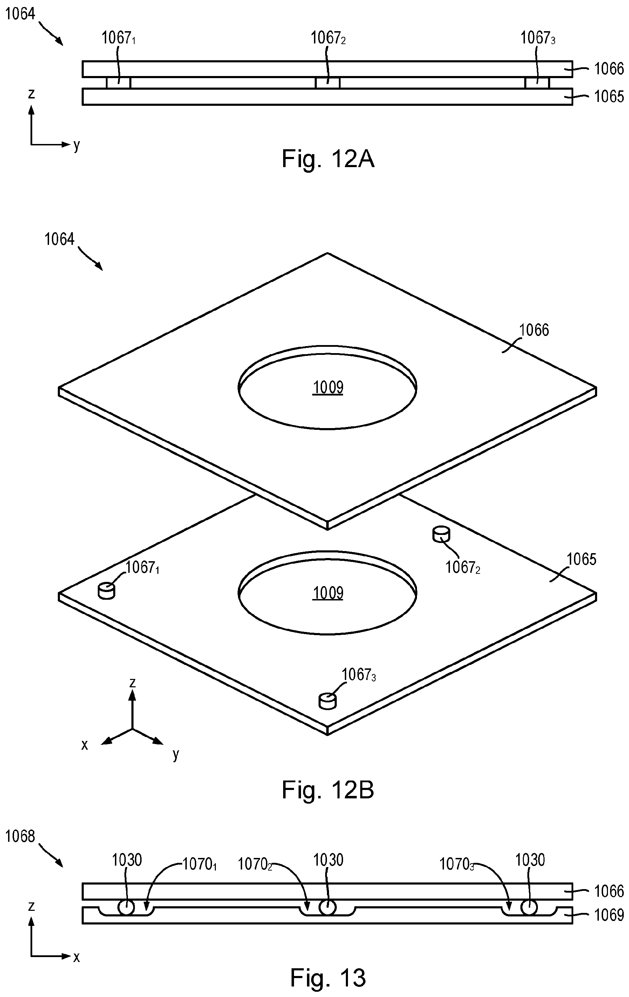

Referring also to Figures 12A and 12B, a first planar bearing 1064 (also referred to as a three-point bearing) is shown.

Figure 12A is a side view and Figure 12B is an exploded projection view.

The first planar bearing 1064 includes a first plate 1065 which slides in contact with a second plate 1066. The first plate 1065 supports at least three cylindrical protrusions 1067 including at least first 1067₁, second 1067₂ and third 1067₃ cylindrical protrusions which are not co-linear, for example arranged at the points of a triangle. The second plate 1066 is urged into contact with the flat surfaces of the cylindrical protrusions 1067 by biasing means (not shown in Figures 12A and 12B), and is free to slide in a plane parallel to the first and second axes x, y, and to rotate about an axis parallel to the third axis z. In this way, the relative motions between the first plate 1065 and the second plate 1066 correspond to Tx, Ty and/or Rz. Unless a biasing force urging the plates 1065, 1066 together is overcome, Tz, Rx and Ry movements are constrained.

In the example shown in Figures 12A and 12B, both plates 1065, 1066 take the form of an annulus having a rectangular outer perimeter and a circular inner perimeter defining a central aperture 1009. However, the shape of the plates 1065, 1066 is not relevant to the function of the first planar bearing 1064, and any shapes of plate may be used instead. Although three cylindrical protrusions 1067₁, 1067₂, 1067₃ are shown in Figures 12A and 12B, in general any number of cylindrical protrusions greater than or equal to three may be used.

Referring also to Figure 13, a second planar bearing 1068 is shown.

The second planar bearing 1068 is the same as the first planar bearing 1064, except that the cylindrical protrusions 67 are replaced by ball bearings 1030₁, 1030₂, 1030₃. The first plate 1065 may also be replaced with a third plate 1069 including recesses 1070₁, 1070₂, 1070₃, for example circular indents, for receiving corresponding ball bearings 1030₁, 1030₂, 1030₃. The second planar bearing 1068 functions in the same way as the first planar bearing 1064, except that the second planar bearing 1068 is a rolling bearing instead of a plain bearing.

### - Gimbal -

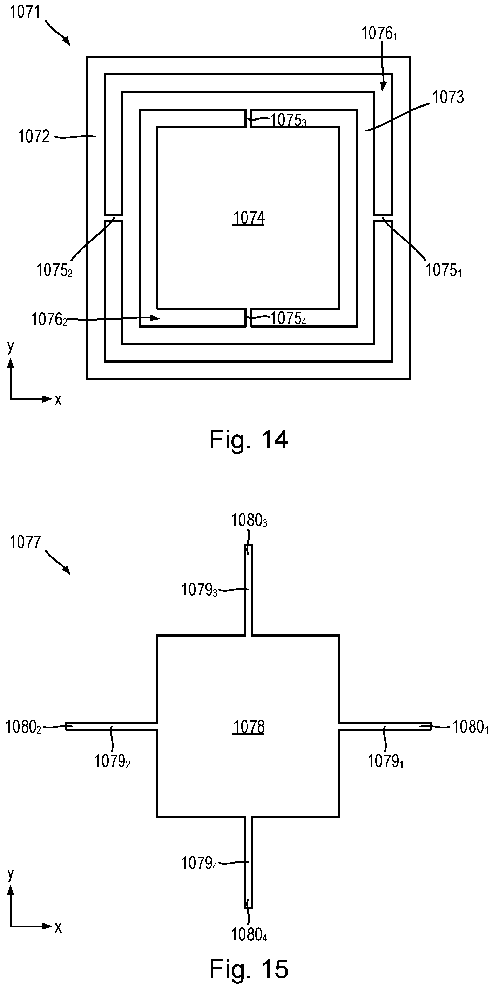

Referring also to Figure 14, a first gimbal bearing 1071 is shown.

The first gimbal bearing 1071 includes an outer frame 1072, an inner frame 1073 and a central portion 1074. The outer frame 1072 and the inner frame 1073 are connected by a first and second torsion beam portions 1075₁, 1075₂ which are positioned space apart parallel to the first axis x and on opposite sides of the inner frame 1073. The first and second torsion beam portions 1075₁, 1075₂ are co-linear with one another and with a central point of the central portion 1074. With the exception of the torsion beam portions 1075₁, 1075₂, the inner frame 1073 is separated from the outer frame 1072 by a first gap 1076₁.

The inner frame 1073 and the central portion 1074 are connected by third and fourth torsion beam portions 1075₃, 1075₄ which are positioned space apart parallel to the second axis y and on opposite sides of the central portion 1074. The third and fourth torsion beam portions 1075₃, 1075₄ are co-linear with one another and with a central point of the central portion 1074. With the exception of the torsion beam portions 1075₃, 1075₄, the inner frame 1073 is separated from the central portion by a second gap 1076₂.

If the outer frame 1072 is clamped, then the central portion 1074 may rotate Rx about the first axis x by torsion of the first and second torsion beam portions 1075₁, 1075₂, and/or rotate Ry about the second axis y by torsion of the third and fourth torsion beam portions 1075₃, 1075₄. In this way, the relative motions between the central portion 1074 and the outer frame 1072 correspond to Rx and Ry whilst other movements Tx, Ty, Tz and Rz are constrained.

The width and through-thickness of torsion beam portions 1075 should be small enough to enable sufficient (i.e. designed for) rotation by torsion in response to forces applicable using an SMA drive arrangement 11, 20.

Referring also to Figure 15, a second gimbal bearing 1077 is shown.

The second gimbal bearing 1077 includes a central portion 1078 connected to four elongated torsion beam portions 1079₁, 1079₂, 1079₃, 1079₄. The first and second elongated torsion beam portions 1079₁, 1079₂ are spaced apart parallel to the first direction x and on opposite sides of the central portion 1078. The first and second elongated torsion beam portions 1079₁, 1079₂ are co-linear with one another and a middle point of the central portion 1078. The third and fourth elongated torsion beam portions 1079₃, 1079₄ are spaced apart parallel to the second direction y and on opposite sides of the central portion 1078. The third and fourth elongated torsion beam portions 1079₃, 1079₄ are co-linear with one another and a middle point of the central portion 1078.

If the free ends 1080 of the torsion beam portions 1079 are clamped, then the central portion 1078 may rotate Rx about the first axis x by torsion of the first and second torsion beam portions 1079₁, 1079₂ and bending of the third and fourth torsion beam portions 1079₃, 1079₄ (for example one deflects up the other down). Additionally or alternatively, the central portion 1078 may rotate Ry about the second axis y by torsion of the third and fourth torsion beam portions 1079₃, 1079₄ and bending of the first and second torsion beam portions 1079₁, 1079₂.

Gimbal bearings are not restricted to webs of material such as the first and second gimbal bearings 1071, 1077.

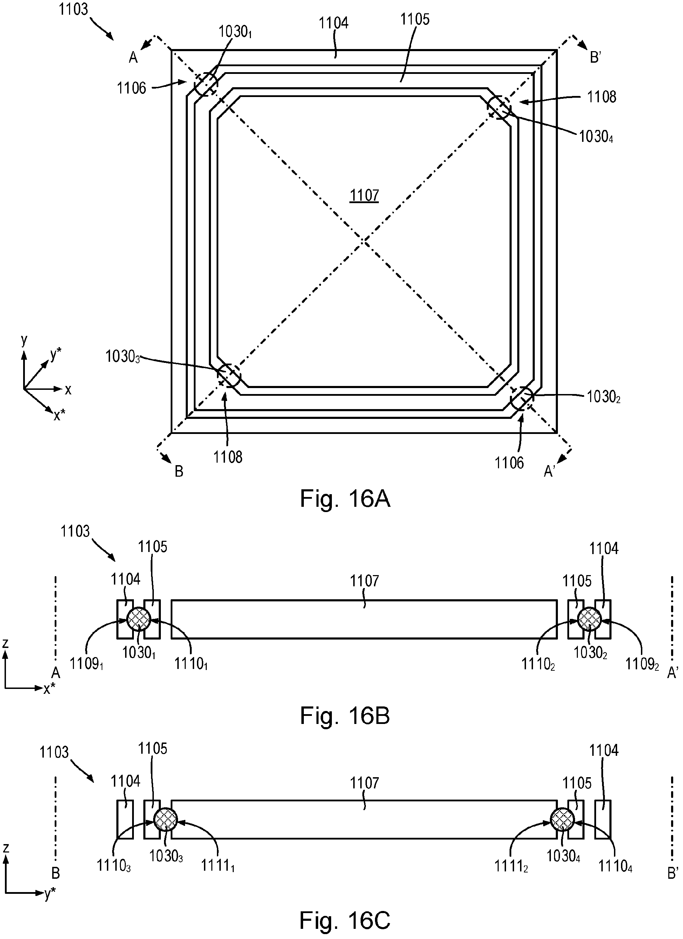

For example, referring also to Figures 16A, 16B and 16C, a third gimbal bearing 1103 is shown. Figure 16A shows a schematic plan view of the third gimbal bearing 1103, Figure 16B shows a cross-section along the line labelled A-A' in Figure 16A and Figure 16C shows a cross-section along the line labelled B-B' in Figure 16A.

An outer annulus 1104 (also referred to as a first part or first structure) is coupled to an intermediate annulus 1105 (also referred to as a third part or third structure) by a first bearing 1106 configured to support tilting of the intermediate annulus 1105 relative to the outer annulus 1104 about a first axis x*. The intermediate annulus 1105 is arranged within the outer annulus 1104. The intermediate annulus 1105 is coupled to a plate 1107 (also referred to as a second part or second structure) by a second bearing 1108 configured to support tilting of the plate 1107 relative to the intermediate annulus 1105 about a second axis y* which is perpendicular to the first axis x*.

In the example shown in Figures 16A to 16C, the outer annulus 1104 takes the form of a substantially square/rectangular annular plate having edges substantially aligned with axes x, y. The intermediate annulus 1105 also takes the form of a substantially square/rectangular annular plate having edges substantially aligned with the axes x, y. The first and second axes x*, y* for tiling are rotated 45 degrees ( 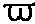 /4) clockwise about a common third axis z relative to the axes x, y. The first bearing 1106 take the form of a first pair of ball bearing elements (or balls) 1030₁, 1030₂ which are disposed between diagonally opposite corners of the outer annulus 1104 and the intermediate annulus 1105. Equivalently, the first pair of balls 1030₁, 1030₂ are spaced apart along, and coaxial with, the first axis x* for tilting.

Each ball 1030₁ 1030₂ of the first 1106 is received between a retaining surface 1109₁, 1109₂ of the outer annulus 1104 and a retaining surface 1110₁, 1110₂ of the intermediate annulus 1105. The retaining surfaces 1109₁, 1109₂, 1110₁, 1110₂ are shaped to receive and support the respective balls, and when assembled the intermediate annulus 1105 is able to rotate about the first axis x* relative to the outer annulus 1104. The balls 1030₁, 1030₂ may be able to slide relative to both retaining surfaces 1109₁, 1109₂, 1110₁, 1110₂, or may be connected (for example welded or bonded) to either, but not both, of the retaining surfaces 1109₁, 1109₂, 1110₁, 1110₂.

In the example shown in Figures 16A to 16C, the plate 1107 takes the form of a substantially square/rectangular plate having edges substantially aligned with axes x, y. The second 1108 take the form of a second pair of balls 1030₃, 1030₄ which are disposed between diagonally opposite corners of the intermediate annulus 1105 and the plate 1107. The second pair of balls 1030₃, 1030₄ are disposed at the corners of the intermediate annulus 1105 which do not correspond to the first pair of balls 1030₁, 1030₂. Equivalently, the second pair of balls 1030₃, 1030₄ are spaced apart along, and coaxial with, the second axis y* for tilting.

Each ball 1030₂ 1030₂ of the second bearing 1108 is received between a retaining surface 1110₃, 1110₄ of the intermediate annulus 1105 and a retaining surface 1111₁, 1111₂ of the plate 1107. The retaining surfaces 1110₃, 1110₄, 1111₁, 1111₂ are shaped to receive and support the respective balls 1030₃, 1030₄, and when assembled the plate 1107 is able to rotate about the second axis y* relative to the intermediate annulus 1105. The retaining surfaces 1110₁, 1110₂ corresponding to the first bearing 1106 are formed on an outer circumference of the intermediate annulus 1105, whereas the retaining surfaces 1110₃, 1110₄ corresponding to the second bearing 1108 are formed on an inner circumference. The balls 1030₃, 1030₄ may be able to slide relative to both retaining surfaces 1110₃, 1110₄, 1111₁, 1111₂, or may be connected (for example welded or bonded) to either, but not both, of the retaining surfaces 1110₃, 1110₄, 1111₁, 1111₂.

In this way, the plate 1107 (second part) is able to tilt (rotate) relative to the outer annulus 1104 (first part) about first and/or second axes x*, y*.

Although shown in Figures 16A to 16C as a solid plate, in other examples the plate 1107 may take the form of an annular plate including a central aperture 1109.

Although shown in Figures 16A to 16C as substantially square, the outer annulus 1104, the intermediate annulus 1105 and the plate 1107 need not be square and may instead be rectangular, circular, or any other regular or irregular shape. Square/rectangular and/or circular shapes may be preferred for the outer annulus 1104, the intermediate annulus 1105 and the plate 1107 in order to make efficient use of space within a device including the third gimbal bearing 1103. Preferably, though not essentially, the outer annulus 1104, intermediate annulus 1105 and plate 1107 have substantially the same shape.

Although shown in Figures 16A to 16C with the first and second axes x*, y* for tilting substantially coinciding with a centre of mass of the plate 1107, this need not be the case. In other examples, the first and second axes x*, y* for tilting may be offset above or below (relative to the third axis z) the centre of mass of the plate 1107.

The first and second bearings 1106 1108 are not limited to pairs of balls 1030₁, 1030₂, 1030₃, 1030₄ as shown. For example, the first bearing 1106 may take the form of a first pair of pins (not shown) extending from the outer annulus 1104 (first part) and received by the intermediate annulus 1105 (third part), or vice versa. Similarly to the first pair of balls 1030₁, 1030₂, the first pair of pins (not shown) should be co-axial with one another and with the first axis x*. Similarly, the second bearing 1108 may take the form of a second pair of pins (not shown) extending from the plate 1107 (second part) and received by the intermediate annulus 1105 (third part), or vice versa. In another examples, the first and/or second bearings 1106, 1108 may be provided by ball-and-socket (or ball-and-cap) joints.

### - Tilting rolling bearings -

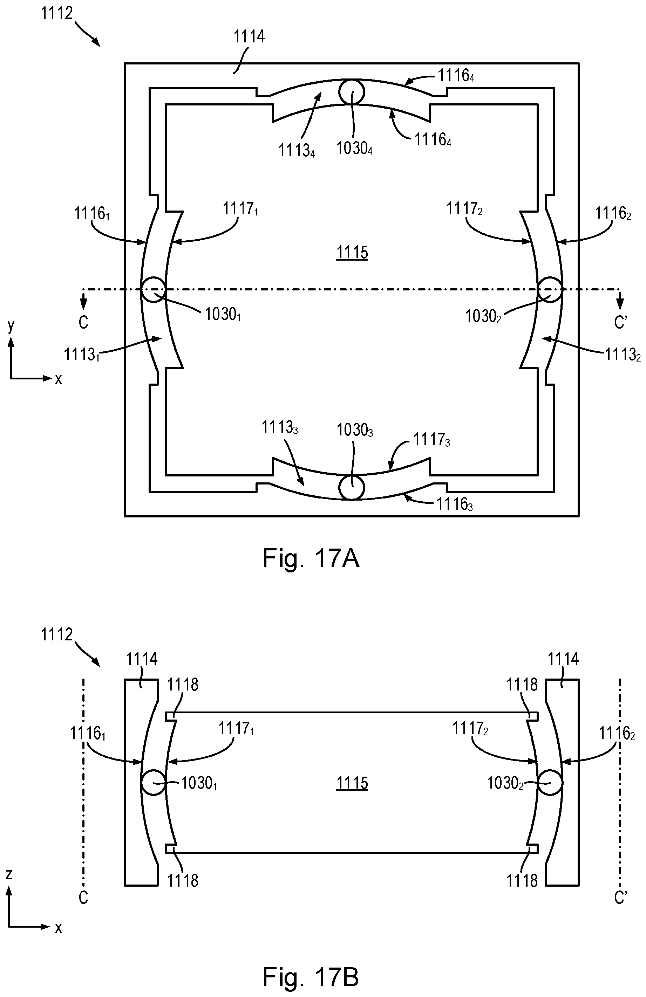

Referring also to Figures 17A and 17B a first tilting rolling bearing 1112 is shown.

Figure 17A is a schematic plan view of the first tilting rolling bearing 1112 and Figure 17B is a cross-section along the line labelled C-C' in Figure 17A.

The first tilting rolling bearing 1112 includes a first pair of rolling bearings 1113₁, 1113₂ coupling an outer annulus 1114 (also referred to as a first part or first structure) to a plate 1115 (also referred to as a second part or second structure). The first pair of rolling bearings 1113₁, 1113₂ are configured to support tilting of the plate 1115 relative to the outer annulus 1114 about a first axis x. The first tilting rolling bearing 1112 includes a second pair of rolling bearings 1113₃, 1113₄ coupling the outer annulus 1114 to the plate 1115 in parallel with the first pair or rolling bearings 1113₁, 1113₂. The second pair of rolling bearings 1113₃, 1113₄ are configured to support tilting of the plate 1115 relative to the outer annulus 1114 about a second axis y.

Each of the rolling bearings 1113 is formed by a ball 1030 sandwiched between a concave curved bearing surface 1116 of the outer annulus 1114 and a convex curved bearing surface 1117 of the plate 1115. In the example shown in Figures 17A and 17B, the concave and convex bearing surfaces 1116, 1117 correspond to the surfaces of concentric spheres centred with the outer annulus 1114 and plate 1115 and differing in radius by approximately the diameter of the balls 1030.

In this way, the first tilting rolling bearing 1112 permits tilting of the plate 1115 relative to the outer annulus 1114 about the first and second axes x, y, and also rotation of the plate 1115 relative to the outer annulus 1114 about the third axis z, as the balls 1030 roll against the bearing surfaces 1116, 1117. One or more both sets of bearing surfaces 1116, 1117 may include one or more retaining lips 1118 to retain the balls 1030 within the bearing races defined between the bearing surfaces 1116, 1117. At the same time, translations of the plate 1115 relative to the outer annulus 1114 along the first axis x and or the second axis y are constrained. In a neutral configuration, the balls 1030 may be located slightly above or below (relative to the primary axis) the first and/or second axis x, y in order to help constrain translations of the plate 1115 relative to the outer annulus 1114 along a third axis z.

If rotation about the third axis z is not desired, this may be constrained by changing the shapes of the bearing surfaces 1116, 1117.

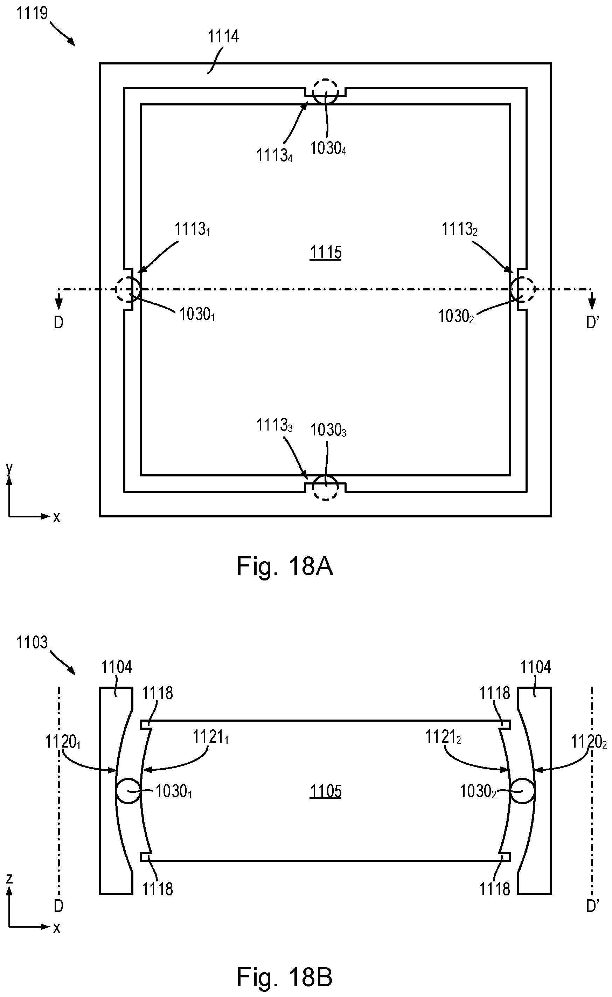

For example, referring also to Figures 18A and 18B, a second tilting rolling bearing 1119 is shown.

Figure 18A is a schematic plan view of the second tilting rolling bearing 1119 and Figure 18B is a cross-section along the line labelled D-D' in Figure 18A.

The second tilting rolling bearing 1119 is the same as the first tilting rolling bearing 1112, except that the spherical bearing surfaces 1116, 1117 are swapped for cylindrical bearing surfaces 1120, 1121. The bearing surfaces 1120₁, 1120₂, 1121₁, 1121₂ of the first pair of rolling bearings 1113₁, 1113₂ correspond to the surfaces of a pair of cylinders which are co-axial with the second axis y and which differ in radius by an amount approximately equal to the diameter of the balls 1030. Similarly, the bearing surfaces 1120₃, 1120₄, 1121₃, 1121₄ of the second pair of rolling bearings 1113₃, 1113₄ correspond to the surfaces of a pair of cylinders which are co-axial with the first axis x and which differ in radius by an amount approximately equal to the diameter of the balls 1030.

In this way, rotation of the plate 1115 relative to the outer annulus 1114 about the third axis z may be constrained compared to the first tilting rolling bearing 1112. Additional retaining walls (not shown) may be added to the cylindrical bearing surfaces 1120, 1121 to prevent lateral sliding of the balls 1030 in the direction of the first and/or second axes x, y.

In order to improve retention of the balls 1030 by reducing slippage and/or to improve robustness against impact, one or more sets of bearing surfaces 1116, 1117, 1120, 1121 of the first or second tilting rolling bearings 1112, 1119 may be sprung.

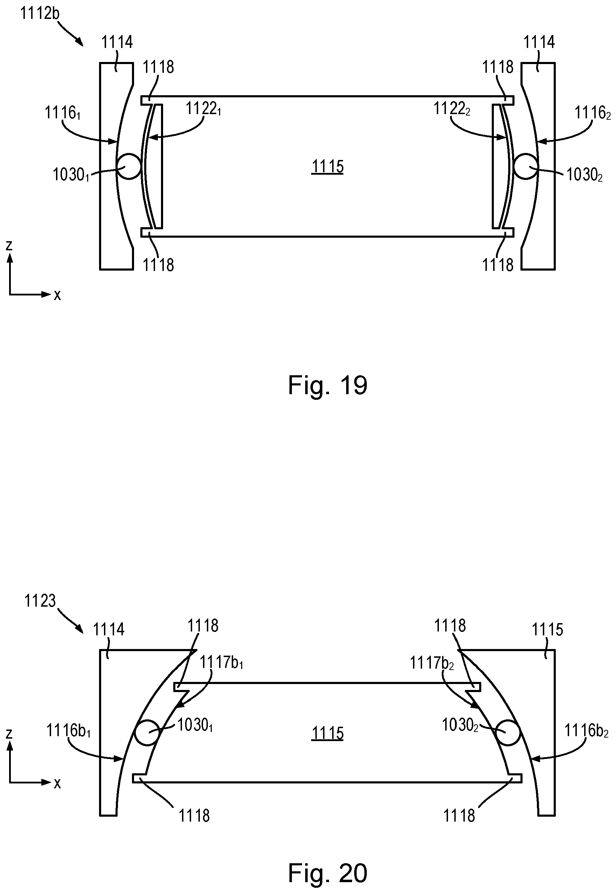

For example, referring also to Figure 19, a modified first tilting rolling bearing 1112b is shown in an equivalent view to Figure 17B,

The modified first tilting rolling bearing 1112b is identical to the first tilting rolling bearing 1112, except that the bearing surfaces 1117 of the plate 1115 have been replaced by sprung plates 1122 having substantially the same shape. The separation between the bearing surfaces 1116 of the outer annulus 1114 and the un-deformed sprung plates 1122 may be smaller than the diameter of the balls 1030. In this way, the spring plates 1122 will be slightly loaded when the modified first tilting rolling bearing 1112b is assembled. The force provided by the sprung plates 1122 may increase friction on the balls 1030 to help prevent slippage and promote rolling. The compliance of the sprung plates 1122 may help to prevent the balls 1030 denting or damaging the bearings surfaces 1116 if a device containing the modified first tilting rolling bearing 1112b is subjected to an impact.

Similarly, any of the other bearing surfaces 1116, 1117, 1120, 1121 of the first and/or second tilting rolling bearings 1112, 1119 may be replaced with sprung plates. Alternatively, the bearing surfaces 1116, 1117, 1120, 1121 may be sprung in a different way, for example, by forming some or all of the bearing surfaces 1116, 1117, 1120, 1121 from compliant material

In Figures 16A to 19, the first and second tilting rolling bearings 1112, 1119 (and modifications thereof) have been illustrated with the first and second axes x, y for tilting being substantially at the same height relative to the third axis z as a centre of mass of the outer annulus 1114 and plate 1115, however, this is not essential.

Referring also to Figure 20, a cross-section through the middle of a third tilting rolling bearing 1123 is shown.

The third tilting rolling bearing 1123 is the same as the first tilting rolling bearing 1112 or is the same as the second tilting rolling bearing 1119, except that the origin of the spheres or cylinders corresponding to the bearing surfaces 1116, 1117, 1120, 1121 has been offset (downwards) along the third axis z relative to the plate 1115 and the outer annulus 1114, to provide offset bearing surfaces 1116b, 1117b, 1120b, 1121b which may be spherical 1116b, 1117b or cylindrical 1120b, 1121b, depending on whether rotation Rz about the third axis z is desired/permissible.

The plate 1115 may be urged downwards (relative to the third axis z) by biasing means such as a spring, a flexure, and so forth, so as to maintain contact with the balls 1030.

Any of the offset bearing surfaces 1116b, 1117b, 1120b, 1121b may be sprung as described hereinbefore.

Although illustrated and described in particular orientations with respect to a set of right-handed Cartesian axes x, y, z for reference, any of the bearings described hereinbefore may be oriented at an arbitrary angle.

The bearings described hereinbefore may be formed of any suitable materials and using any suitable fabrication methods. For example, plate- or sheet-like components may be fabricated from metal sheets, for example stainless steel, with patterning provided by chemical or laser etching. Milling or stamping could be used provided that this does not introduce unacceptably residual strains causing distortion of parts. After patterning, such parts may be bent or pre-deformed as needed. Complex three-dimensional parts may be built up by attaching parts to plates, sheets or other parts, for example using adhesives, welding, brazing, soldering and so forth. Alternatively, complex three-dimensional parts may be formed by, for example, sintering or diecasting of metals, or by injection moulding of polymers. Any bearing surfaces may be formed from a polymer such as POM (Acetal), PTFE or PTFE-impregnated POM.

### First actuator assembly

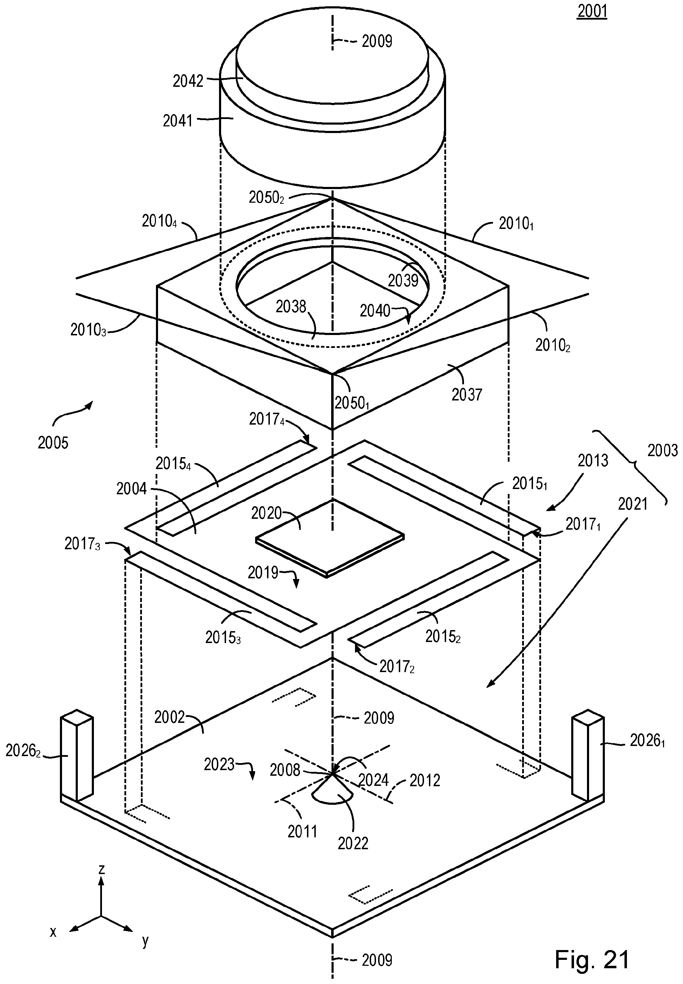

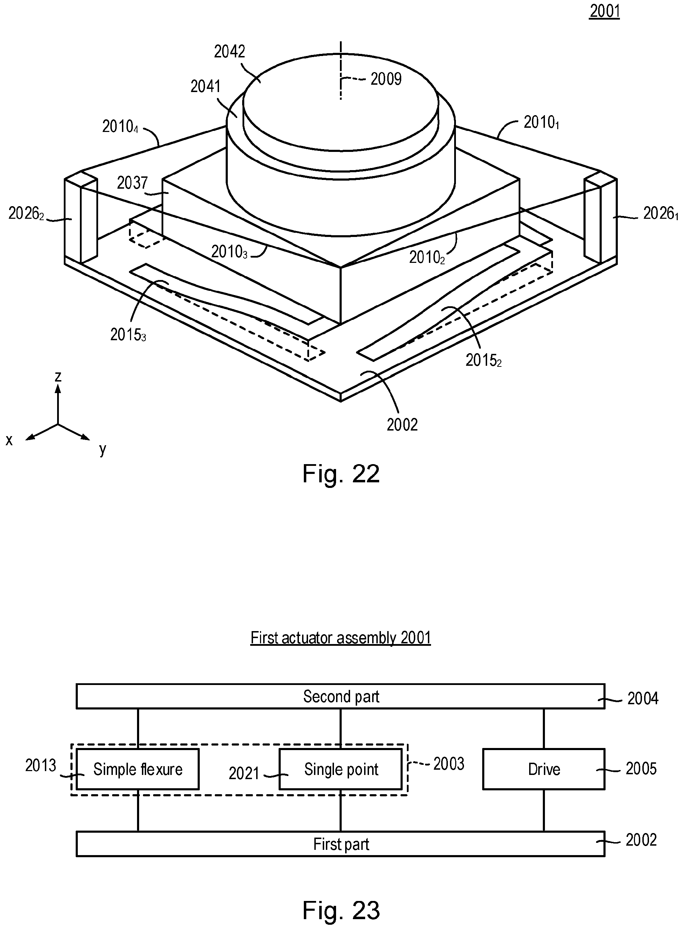

Referring also to Figures 21 to 25, a first actuator assembly 2001 is schematically shown.

The actuator assembly 2001 comprises a first part 2002, a bearing arrangement 2003, a second part 2004, and a drive system 2005.

The bearing arrangement 2003 supports the second part 2004 on the first part 2002 of the actuator assembly 2001. The second part 2004 is tiltable about a pivot point 2008 which lies on the optical axis 2009 (or "primary axis") passing through the actuator assembly 2001. In some examples, for example involving a gimbal, the pivot point 2008 may be simply a point in space. The pivot point 2008 may, in some cases, move when translational and/or rotational forces are applied to the bearing arrangement 2003.

Hereinafter, the first part 2002 may be referred to as the "fixed part', "support" or "support structure" and the second part 2004 may be referred to as the "moveable part' or "tiltable part'.

The drive system 2005 comprises a total of four shape memory alloy wires 2010₁, 2010₂, 2010₃, 2010₄ (herein referred to also as "lengths of shape memory alloy wire"). The four shape memory alloy wires 2010₁, 2010₂, 2010₃, 2010₄ mechanically connect (or "couple") the second part 2004 to the first part 2002 of the actuator assembly and are used to move the second part 2004 with respect to the first part 2002 of the actuator assembly 2001. The shape memory alloy wires 2010₁, 2010₂, 2010₃, 2010₄ are formed from copper-aluminium-nickel alloy, nickel-titanium alloy or other suitable shape memory alloy.

The shape memory alloy wires 2010₁, 2010₂, 2010₃, 2010₄ are substantially co-planar and the arrangement is referred to as "a flat four-wire SMA wire arrangement'. The shape memory alloy wires 2010₁, 2010₂, 2010₃, 2010₄ can, however, be arranged so as not to be co-planar (in "an angled four-wire SMA wire arrangement') hereinafter described.

### - Bearing arrangement 2003 -

The bearing arrangement 2003 is configured to guide tilting of the second part 2004 about first and/or second axes 2011, 2012 (i.e., about the first axis 2011, about the second axis 2012 and combinations of tilt about the first and second axes 2011, 2012). The first and second axes 2011, 2012 are substantially aligned with axes x, y in the configuration shown in Figure 21. In some examples, the bearing arrangement 2003 may be configured to constrain rotation of the second part 2004 about the primary axis 2009. The first and second axes 2011, 2012 are not parallel with respect to each other and are perpendicular to the primary axis 2009. In this example, the first and second axes 2011, 2012 are also perpendicular to each other. The first and second axes 2011, 2012 pass through the pivot point 2008.

The bearing arrangement 2003 includes a simple flexure 2013 substantially as hereinbefore described with reference to Figures 7A and 7B.

The simple flexure 2013 includes two pairs of beam portions (hereinafter referred to as "flexures") 2015₁, 2015₂, 2015₃, 2015₄. Each flexure 2015₁, 2015₂, 2015₃, 2015₄ is rigidly connected to the tiltable part 2004 at one end (a "first end"), and rigidly connected, e.g., by welding, to the support 2002 at their other end ("second end" or "free end") 2017₁, 2011₂, 2017₃, 2017₄.

The tiltable part 2004 and the flexures 2015₁, 2015₂, 2015₃, 2015₄ are a single piece. For example, the second part 2004 and the flexures 2015₁, 2015₂, 2015₃, 2015₄ may be formed by etching or machining a sheet of metal or metal alloy, such as stainless steel.

The flexures 2015₁, 2015₂, 2015₃, 2015₄ can support flexible electrical connections.

The first and third flexures 2015₁, 2015₃ are elongated parallel to the axis y as drawn, and are able to deform by beam bending in the y-z plane. Similarly, the second and fourth flexures 2015₂, 2015₄ are elongated parallel to the axis x as drawn, and are able to deform by beam bending in the x-z plane. Deflection of the flexures 2015₁, 2015₂, 2015₃, 2015₄ laterally (perpendicular to axis z as drawn) is constrained by the connection of all the flexures 2015₁, 2015₂, 2015₃, 2015₄ to the second part 2004.

The tiltable part 2004 is generally thin and flat, and has first and second opposite faces 2018, 2019. The first face 2018 faces the support 2002 and the second face 2019 faces away from the support 2002. The second face 2019 (hereinafter referred to as the "upper face") of the tiltable part 2004 supports an image sensor 2020, such as CCD or CMOS device.

The bearing arrangement 2003 includes a pivot bearing 2021 substantially the same as hereinbefore described with reference to Figures 10 and 11A to 11D.

The pivot bearing 2021 includes a member 2022 (or "protrusion") upstanding from an upper face 2023 (relative to the axis z as drawn) of the support 2002 which serves as a base for the pivot. In some examples, the pivot bearing 2021 may include a separate base which is supported by the support 2002.

The protrusion 2022 has a distal end 2024 which contacts the second part 2004, in particular, a point (or area) of contact on the first face 2018 (herein after referred to either as the "bottom face" or "underside") of the tiltable part 2004. The distal end 2024 of the protrusion 2022 and contact point define the pivot point 2008.

The free ends 2017₁, 2017₂, 2017₃, 2017₄ of the flexures 2015₁, 2015₂, 2015₃, 2015₄ are attached to the upper face 2023 of the support part 2002 (first part). This urges the support 2002 and the tiltable part 2004 together to maintain contact between the protrusion 2022 and the tiltable part 2004.

Anchoring members 2026₁, 2026₂ for the shape memory alloy wires 2010₁, 2010₂, 2010₃, 2010₄ are rigidly attached to the support 2002. The anchoring members 2026₁, 2026₂ can take the form of posts or other structures upstanding from the first part 2002 of the actuator assembly 2001. In this example, two anchoring members 2026₁, 2026₂ are provided which are located in diagonally opposite corners of the support 2002. More than two anchoring members 2026₁, 2026₂, however, may be provided. Crimps (not shown) are used to attached the shape memory alloy wires 2010₁, 2010₂, 2010₃, 2010₄ the anchoring members 2026₁, 2026₂. The anchoring members 2026₁, 2026₂ form part of a chassis.

The support 2002 of the actuator assembly is formed a metal or metal alloy, such as stainless steel.

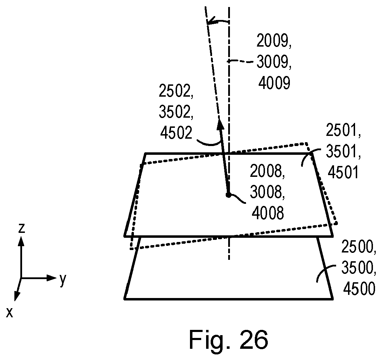

Referring also to Figure 26, the support 2002 lies in a first plane 2500 and the tiltable part 2004 lies in a second plane 2501 which has a normal 2502 (herein also referred to as "the axis of tilt' or "tilt axis") such that tilting the tiltable part 2002 tilts the normal 2502 away from primary axis 2009.

Referring still to Figures 21 to 25, the support 2002 carries a bracket 2037 which surrounds the image sensor 2020. The bracket 2037 is generally box-shaped and includes a top plate 2038 (or "top") having a central, circular aperture 2039. The top plate 2038, on its upper surface 2040, supports a lens carriage 2041.

The lens carriage 2041 is generally annular and hold lens assembly 2042. An autofocus system (not shown) and/or an (additional) OIS system may be provided between the lens assembly 2042 and the lens carriage 2041.

The top plate 2038 of the bracket 2037 has four corners including first and second opposite corners 2050₁, 2050₂. First respective ends of the second and third shape memory alloy wires 2010₂, 2010₃ are attached to the first corner 2050₁ of the top 2038 of the bracket 2037. A second end of the second shape memory alloy wire 2010₂ is attached to the first anchoring member 2026₁ and a second end of the third shape memory alloy wire 2010₃ is attached to the second anchoring member 2026₂. Similarly, first respective ends of the fourth and first shape memory alloy wires 2010₄, 2010₁ are attached to the second corner 2050₂ of the top 2038 of bracket 2037. A second end of the fourth shape memory alloy wire 2010₄ is attached to the second anchoring member 2026₂ and a second end of the first shape memory alloy wire 2010₁ is attached to the first anchoring member 2026₁.

Respective static crimps (not shown) are used to attach the respective first ends of the shape memory alloy wires 2010₁, 2010₂, 2010₃, 2010₄ to the anchoring members 2026₁, 2026₂. Respective moving crimps (not shown) are used to attach the respective second ends of the shape memory alloy wires 2010₁, 2010₂, 2010₃, 2010₄ to the corners 2050₁, 2050₂ of the top 2038 of the bracket 2037.

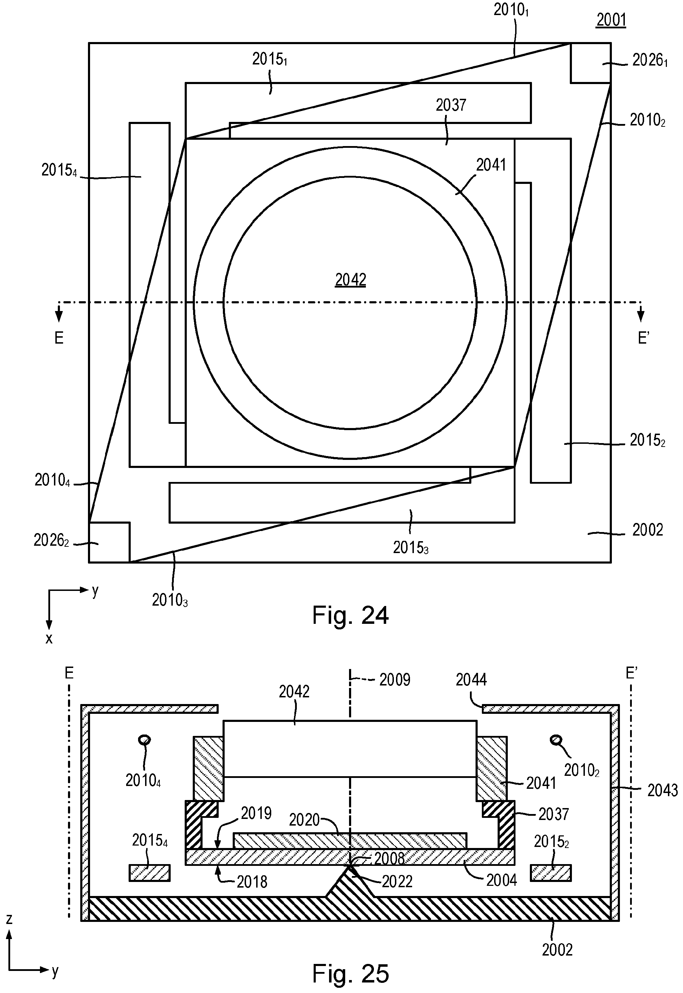

Referring in particular to Figure 25, a box-like shielding can 2043 is provided around the bearing arrangement 2003, second part 2004, SMA wires 2010₁, 2010₂, 2010₃, 2010₄ lens carriage 2041, and lens assembly 2042. The can 2043 has a central, circular aperture 2044.

### - Movement -

Referring still to Figures 21 to 24, the first actuator assembly 2001 is able to provide OIS by tilting the second part 2004.

Different movements are caused by heating and cooling different combinations of the SMA wires 2010₁, 2010₂, 2010₃, 2010₄. As explained earlier, heating can be caused by driving a current through an SMA wire, which causes the SMA wire to contract.

A change in tilt about a diagonal (e.g., about the line Y = - X) is brought about by increasing the power to, and hence contracting, two adjacent wires, for example, fourth and first wires 2010₄, 2010₁ while decreasing the power to, and hence allowing expansion of, the other two wires, in this example, second and third wires 2010₂, 2010₂, thereby producing a force on the second part 2004, in this case along the line Y = X.

Suitable tilts can be produced as a linear combination of changes in diagonal tilts.

If the SMA wires 2010₁, 2010₂, 2010₃, 2010₄ lies A mm above the pivot point 2008 and have a stroke of ± B mm, then the actuator 2001 can produce tilt of ± sin(B/A). For example, when A = 1 mm and B = 0.09 mm (i.e., 90 µm), then tilt is about ±5°.

### Second actuator assembly

In the first actuator assembly 2001, the SMA wires 2010₁, 2010₂, 2010₃, 2010₄ generally form a rhomboidal-shaped loop around the outside of the lens carriage 2041. The SMA wires 2010₁, 2010₂, 2010₃, 2010₄ are generally co-planar lying in a plane which is parallel to and offset from the plane containing first and second axes 2011, 2012.

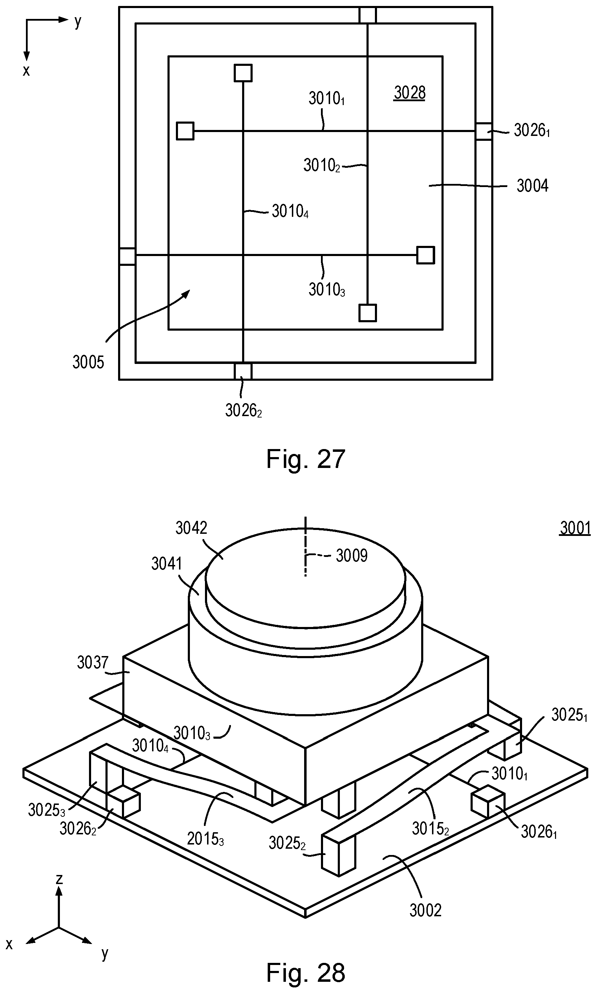

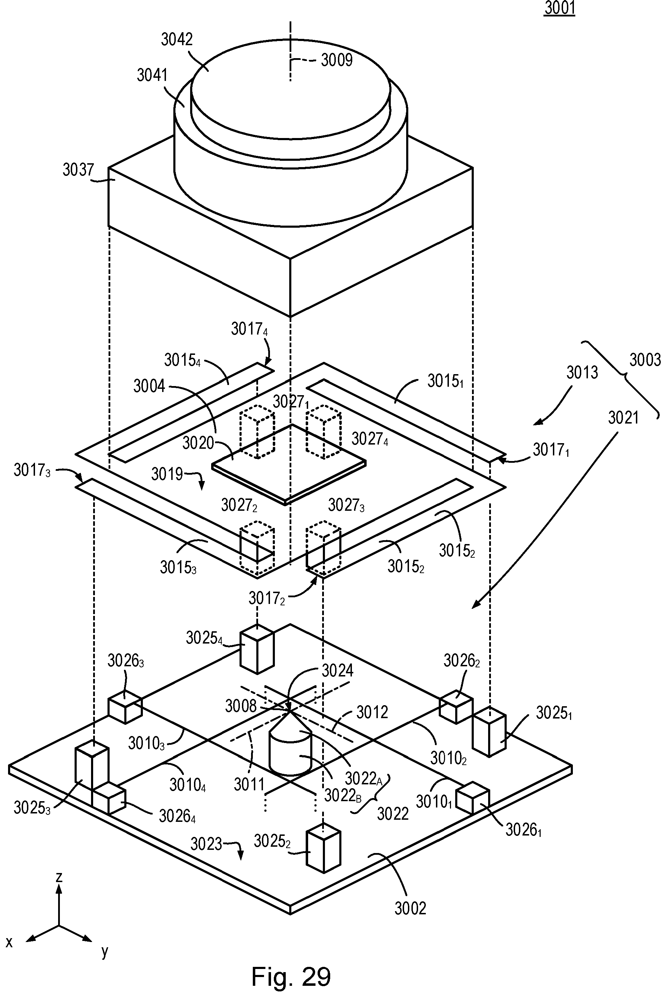

Referring also to Figures 27, 28 and 29, a second actuator assembly 3001 is schematically shown.

The actuator assembly 3001 comprises a first part 3002, a bearing arrangement 3003, a second part 3004 and a drive system 3005.

The bearing arrangement 3003 supports the second part 3004 on the first part 3002 of the actuator assembly 3001. The second part 3004 is tiltable about a pivot point 3008 which lies on the optical axis 3009 (or "primary axis") passing through the actuator assembly 3001. In some examples, for example involving a gimbal, the pivot point 3008 may be simply a point in space. The pivot point 3008 may, in some cases, move when translational and/or rotational forces are applied to the bearing arrangement.

Hereinafter, the first part 3002 may be referred to as the "fixed part', "support" or "support structure" and the second part 3004 may be referred to as the "moveable part' or "tiltable part" of the actuator assembly 3001.

The drive system 3005 comprises a total of four shape memory alloy wires 3010₁, 3010₂, 3010₃, 3010₄ (herein referred to also as "lengths of shape memory alloy wire"). The four shape memory alloy wires 3010₁, 3010₂, 3010₃, 3010₄ couple the second part 3004 to the first part 3002 of the actuator assembly and are used to move the second part 3004 with respect to the first part 3002 of the actuator assembly 3001. The shape memory alloy wires 3010₁, 3010₂, 3010₃, 3010₄ are formed from copper-aluminium-nickel alloy, nickel-titanium alloy or other suitable shape memory alloy.

The shape memory alloy wires 3010₁, 3010₂, 3010₃, 3010₄ are substantially co-planar and the arrangement is referred to as "a flat four-wire SMA wire arrangement'. The shape memory alloy wires 3010₁, 3010₂, 3010₃, 3010₄ can, however, be arranged so as not to be co-planar (in "an angled four-wire SMA wire arrangement') hereinafter described.

The second actuator assembly 3001 is similar to the first actuator assembly 2001 but differs mainly in two ways.

First, the shape memory wires 3010₁, 3010₂, 3010₃, 3010₄ pass between the support 3002 and the tiltable part 3004, i.e., under the tiltable part 3004 (under relative to the axis z as drawn).

Secondly, the tiltable part 3004 is generally raised with respect to the support 3002.

### - Bearing arrangement 3003 -

The bearing arrangement 3003 is configured to guide tilting of the second part 3004 about first and/or second axes 3011, 3012 (i.e., about the first axis 3011, about the second axis 3012 and combinations of tilt about the first and second axes 3011, 3012). In some examples, the bearing arrangement 3003 may be configured to constrain rotation of the second part 3004 about the primary axis 3008. The first and second axes 3011, 3012 are not parallel with respect to each other and are perpendicular to the primary axis 3009. In this example, the first and second axes 3011, 3012 are also perpendicular to each other. The first and second axes 3011, 3012 pass through the pivot point 3008.

The bearing arrangement 3003 includes a simple flexure 3013 substantially as hereinbefore described with reference to Figures 7A and 7B.

The simple flexure 3013 includes two pairs of beam portions (hereinafter referred to as "flexures") 3015₁, 3015₂, 3015ₛ, 3015₄. Each flexure 3015₁, 3015₂, 3015ₛ, 3015₄ is rigidly connected to the tiltable part 3004 at one end (a "first end") and has a second (free) end 3017₁, 3011₂, 3017₃, 3017₄.

The tiltable part 3004 and the flexures 3015₁, 3015₂, 3015ₛ, 3015₄ are formed in a single-piece. For example, the second part 3004 and the flexures 3015₁, 3015₂, 3015ₛ, 3015₄ may be formed by etching or machining a sheet of metal or metal alloy, such as stainless steel.

The flexures 3015₁, 3015₂, 3015ₛ, 3015₄ can support flexible electrical connections.

The first and third flexures 3015₁, 3015₃ are elongated parallel to the y axis as drawn, and are able to deform by beam bending in the y-z plane. Similarly, the second and fourth flexures 3015₂, 3015₄ are elongated parallel to the x axis as drawn, and are able to deform by beam bending in the x-z plane. Deflection of the flexures 3015₁, 3015₂, 3015₃, 3015₄ laterally (perpendicular to the z axis as drawn) is constrained by the connection of all the flexures 3015₁, 3015₂, 3015₃, 3015₄ to the second part 3004.

The second (free) ends 3017₁, 3017₂, 3017₃, 3017₄ of the first, second, third and fourth flexures 3015₁, 3015₂, 3015₃, 3015₄ are fixedly connected (or "attached") to respective tops of first, second, third and fourth blocks 3025₁, 3025₂, 3025₃, 3025₄ which provide raised areas of attachment to the support 3002.

The tiltable part 3004 is generally thin and flat, and has first and second opposite faces 3018, 3019. The first face 3018 faces the support 3002 and the second face 3019 faces away from the support 3002. The second face 3019 (hereinafter referred to as the "upper face") of the tiltable part 3004 supports an image sensor 3020, such as CCD or CMOS device.

The bearing arrangement 3003 includes a pivot bearing 3021 substantially the same as hereinbefore described with reference to Figures 10 and 11A to 11D.

The pivot bearing 3021 includes a member 3022 (or "protrusion") upstanding from an upper face 3023 of the support 3002 which serves as a base for the pivot. In some examples, the pivot bearing 3021 may include a separate base which is supported by the support 3002.

The protrusion 3022 has a distal end 3024 which contacts the second part 3004, in particular, a point (or area) of contact on the first face 3018 (herein after referred to either as the "bottom face" or "underside") of the tiltable part 3004. The distal end 3024 of the protrusion 3022 and contact point define the pivot point 3008.

The protrusion 3022 is taller (relative to the axis z as drawn) than the protrusion 2020 in the first actuator assembly. The protrusion 3022 includes a top part 3022_{A} and a bottom part 3022_{B} which serves as a pedestal to raise the top part 3022_{A}. The top and bottom parts 3022_{A}, 3022_{B} are a single piece. The protrusion 3022 and the base 3002 may also be single piece.

The second (free) ends 3017₁, 3017₂, 3017₃, 3017₄ of the flexures 3015₁, 3015₂, 3015₃, 3015₄ are attached to the first, second, third and fourth blocks 3025₁, 3025₂, 3025₃, 3025₄ which upstand from the upper face 3023 of the support 3002. This urges the support 3002 and the tiltable part 3004 together to maintain contact between the protrusion 3022 and the support 3002.

A first set of anchoring members 3026₁, 3026₂, 3026₃, 3026₄ for first ends of the shape memory alloy wires 3010₁, 3010₂, 3010₃, 3010₄ are rigidly attached to the support 3002. The anchoring members 3026₁, 3026₂, 3026₃, 3026₄ can take the form of posts or other structures upstanding from the first part 3002 of the actuator assembly 3001. In some example, the anchoring members 3026₁, 3026₂, 3026₃, 3026₄ may be provided by a raised peripheral edge (or "wall"). Crimps (not shown) are used to attach the shape memory alloy wires 3010₁, 3010₂, 3010₃, 3010₄ to the anchoring members 3026₁, 3026₂, 3026₃, 3026₄.

A second set of anchoring members 3027₁, 3021₂, 3027₃, 3027₄ for second ends of the shape memory alloy wires 3010₁, 3010₂, 3010₃, 3010₄ are rigidly attached to the second part 3004. The anchoring members 3027₁, 3027₂, 3027₃, 3027₄ can take the form of posts or other structures depending from the second part 3004 of the actuator assembly 3001. Crimps (not shown) are used to attach the shape memory alloy wires 3010₁, 3010₂, 3010₃, 3010₄ to the bottoms (i.e., distal ends) of the anchoring members 3027₁, 3021₂, 3027₃, 3027₄. The drop (i.e. the depending length) of the second set of anchoring members 3027₁, 3021₂, 3027₃, 3027₄ is less than the height of the protrusion 3022. The difference in length is sufficient to allow sufficient tilting of the second part 3004 of the actuator assembly 3001.

The support 3002 of the actuator assembly is formed a metal or metal alloy, such as stainless steel.

Referring also to Figure 26, the support 3002 lies in a first plane 3500 and the tiltable part 3004 lies in a second plane 3501 which has a normal 3502 (herein also referred to as "the axis of tilt' or "tilt axis") such that tilting the tiltable part 2002 tilts the normal 3502 away from primary axis 3009.

The support 3002 supports a bracket 3037 provided around the image sensor 3020. The bracket 3037 is generally box-shaped and includes a top plate 3038 (or "top") having a central, circular aperture 3039. The top plate 3038, on its upper surface 3040, supports a lens carriage 3041.

The lens carriage 3041 is generally annular and hold lens assembly 3042. An autofocus system (not shown) and/or an (additional) OIS system may be provided between the lens assembly 3042 and the lens carriage 3041.

Similar to the first actuator assembly 2001 , the second actuator 3001 includes box-like shielding can (not shown) provided around the bearing arrangement 3003, second part 3004, SMA wires 3010₁, 3010₂, 3010₃, 3010₄ lens carriage 3041, and lens assembly 3042. The can has a central, circular aperture (not shown).

### - Movement -

Referring still to Figures 27, 28 and 29, the second actuator assembly 3001 is able to provide OIS by tilting the second part 3004.

Different movements are caused by heating and cooling different combinations of the SMA wires 3010₁, 3010₂, 3010₃, 3010₄. As explained earlier, heating can be caused by driving a current through an SMA wire, which causes the SMA wire to contract.

A change in tilt about a diagonal (e.g., about the line Y = - X) is brought about by increasing the power to, and hence contracting, two adjacent wires, for example, fourth and first wires 3010₄, 3010₁ while decreasing the power to, and hence allowing expansion of, the other two wires, in this example, second and third wires 3010₂, 3010₂, thereby producing a force on the second part 3004, in this case along the line Y = X.

Suitable tilts can be produced as a linear combination of changes in diagonal tilts.

If the SMA wires 3010₁, 3010₂, 3010₃, 3010₄ lies A mm above the pivot point 3008 and have a stroke of ± B mm, then the actuator 3001 can produce tilt of ± sin(B/A). For example, when A = 1 mm and B = 0.09 mm (i.e., 90 µm), then tilt is about ±5°.

### Varying separation of the first and second parts

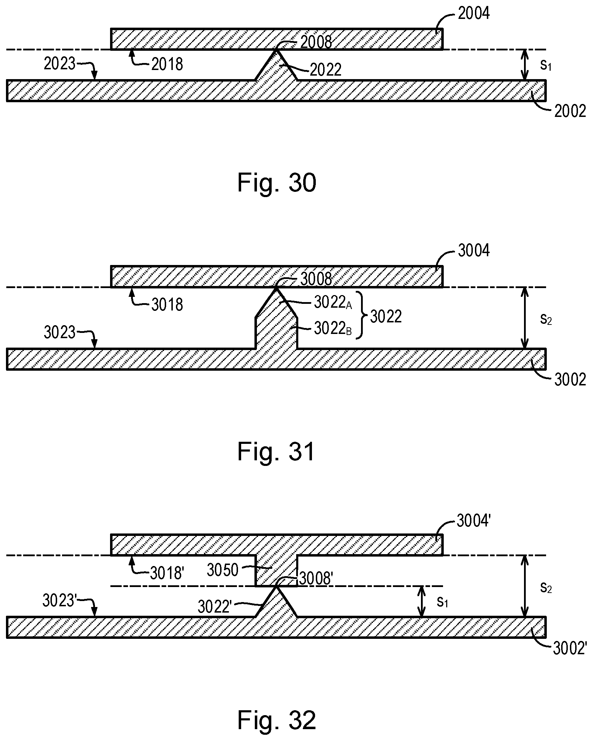

Referring to Figure 30, in the first actuator assembly 2001 (Figure 21), the upper face 2023 of the first part 2002 and the bottom face 2018 of the second part 2004 are separated by a distance s₁ which is substantially equal to the height of the protrusion 2022.

Referring also to Figure 31, in the second actuator assembly 3001 (Figure 27) the upper face 3023 of the first part 3002 and the bottom face 3018 of the second part 3004 are separated by a distance s₂, where s₂ > s₁, which is also substantially equal to the height of the of the protrusion 3022.

In both of these arrangements, the pivot points 2008, 3008 lie substantially in the same plane as the bottom face 2018, 3018 (although the pivot point 2008, 3008 may move when forces are applied which results in deformation).

Referring also to Figure 32, in a modified second actuator assembly, the upper face 3023' of the first part 3002' and the bottom face 3018' of the second part 3004' can still be separated by the distance s₂ but using a different arrangement.

The second part 3004' can be provided with a depending axial member 3050 (or "stud") from its bottom 3018' to co-operate with a shorter protrusion 3022' from the first part 3002'. Thus, this arrangement not only can provide the same distance s₂ of separation as the arrangement used in the second actuator assembly 3001 (Figure 27), but also can offset the pivot point 3008' back, away from the bottom face 3018' of the second part 3004' and towards the first part 3002'.

Using a recess (not shown) the second part 3004 can be used to achieve the opposite effect, i.e., moving the pivot point 3008 upward (relative to the primary axis), away from the first part 3002'.

### Third actuator assembly

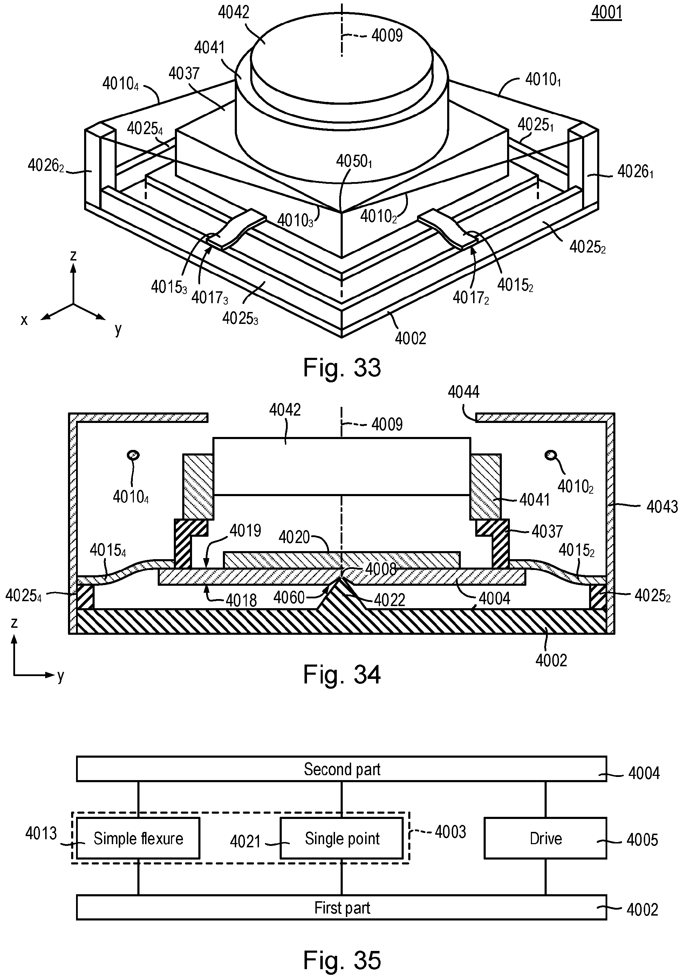

Referring to Figures 33, 34 and 35, a third actuator assembly 4001 is schematically shown.

The actuator assembly 4001 comprises a first part 4002, a bearing arrangement 4003, a second part 4004, and a drive system 4005.

The bearing arrangement 4003 supports the second part 4004 on the first part 4002 of the actuator assembly 4001. The second part 4004 is tiltable about a pivot point 4008 which lies on the optical axis 4009 (or "primary axis") passing through the actuator assembly 4001.

Hereinafter, the first part 4002 may be referred to as the "fixed part', "support" or "support structure" and the second part 4004 may be referred to as the "moveable part' or "tiltable part" of the actuator assembly 4001.

The drive system 4005 comprises a total of four shape memory alloy wires 4010₁, 4010₂, 4010₃, 4010₄ (herein referred to also as "lengths of shape memory alloy wire"). The four shape memory alloy wires 4010₁, 4010₂, 4010₃, 4010₄ mechanically connect (or "couple") the second part 4004 to the first part 4002 of the actuator assembly and are used to move the second part 4004 with respect to the first part 4002 of the actuator assembly 4001. The shape memory alloy wires 4010₁, 4010₂, 4010₃, 4010₄ are formed from copper-aluminium-nickel alloy, nickel-titanium alloy or other suitable shape memory alloy.

The shape memory alloy wires 4010₁, 4010₂, 4010₃, 4010₄ are substantially co-planar and the arrangement is referred to as "a flat four-wire SMA wire arrangement'. The shape memory alloy wires 4010₁, 4010₂, 4010₃, 4010₄ can, however, be arranged so as not to be co-planar (in "an angled four-wire SMA wire arrangement') hereinafter described.

### - Bearing arrangement 4003 -

The bearing arrangement 4003 is configured to guide tilting of the second part 4004 about first and/or second axes 4011, 4012 (i.e., about the first axis 4011, about the second axis 4012 and combinations of tilt about the first and second axes 4011, 4012). In some examples, the bearing arrangement 4003 may be configured to permit rotation of the second part 4004 about the primary axis 4008. The first and second axes 4011, 4012 are not parallel with respect to each other and are perpendicular to the primary axis 4009. In this example, the first and second axes 4011, 4012 are also perpendicular to each other. The first and second axes 4011, 4012 pass through the pivot point 4008. In some examples, for example involving a gimbal, the pivot point 4008 may be simply a point in space. The pivot point 4008 may, in some cases, move when translational and/or rotational forces are applied to the bearing arrangement.

The bearing arrangement 4003 includes a flexure 4013.

The flexure 4013 includes two pairs of tabs (hereinafter referred to as "flexures") 4015₁, 4015₂, 4015₃, 4015₄. Each flexure 4015₁, 4015₂, 4015₃, 4015₄ is rigidly connected to the tiltable part 4004 at one end ("first ends"), and rigidly connected to a raised edge 4025₁, 4025₂, 4025₃, 4025₄ of the support 4002 at their other ends ("second ends") 4017₂, 4017₃, 4017₄.

The tiltable part 4004 and the flexures 4015₁, 4015₂, 4015₃, 4015₄ may be single piece. For example, the second part 4004 and the flexures 4015₁, 4015₂, 4015₃, 4015₄ may be formed by etching or machining a sheet of metal or metal alloy, such as stainless steel.

Each flexure 4015₁, 4015₂, 4015₃, 4015₄ generally takes the form of a short strip extending outwardly from the middle of a respective side of the tiltable part 4004.

The tiltable part 4004 is generally thin and flat, and has first and second opposite faces 4018, 4019. The first face 4018 faces the support 4002 and the second face 4019 faces away from the support 4002. The second face 4019 (hereinafter referred to as the "upper face") of the tiltable part 4004 supports an image sensor 4020, such as CCD or CMOS device.

The bearing arrangement 4003 includes a pivot bearing 4021 substantially the same as hereinbefore described with reference to Figures 10 and 11A to 11D.

The pivot bearing 4021 includes a member 4022 (or "protrusion") upstanding from an upper face 4023 of the support 4002 which serves as a base for the pivot. In some examples, the pivot bearing 4021 may include a separate base which is supported by the support 4002.

The protrusion 4022 has a distal end 4024 which contacts the second part 4004, in particular, a point (or area) of contact on the first face 4018 (herein after referred to either as the "bottom face" or "underside") of the tiltable part 4004. The distal end 4024 of the protrusion 4022 and contact point define the pivot point 4008.

In this case, the tiltable part 4004 includes an indentation 4060 similar to that shown in Figure 11B above. However, other forms of indentation or recess can be used.

The second (free) ends 4017₁, 4011₂, 4017₃, 4017₄ of the flexures 4015₁, 4015₂, 4015₃, 4015₄ are attached to the raised edge 4025. This urges the support 4002 and the tiltable part 4004 together to maintain contact between the protrusion 4022 and the tiltable part 4004.

Anchoring members 4026₁, 4026₂ for the shape memory alloy wires 4010₁, 4010₂, 4010₃, 4010₄ are rigidly attached to the support 4002. The anchoring members 4026₁, 4026₂ can take the form of posts or other structures upstanding from the first part 4002 of the actuator assembly 4001. In this example, two anchoring members 4026₁, 4026₂ are provided which are located in diagonally opposite corners of the support 4002. More than two anchoring members 4026₁, 4026₂, however, may be provided. Crimps (not shown) are used to attached the shape memory alloy wires 4010₁, 4010₂, 4010₃, 4010₄ the anchoring members 4026₁, 4026₂.

The support 4002 of the actuator assembly is formed a metal or metal alloy, such as stainless steel.

Referring also to Figure 26, the support 4002 lies in a first plane 4500 and the tiltable part 4004 lies in a second plane 4501 which has a normal 4502 (herein also referred to as "the axis of tilt' or "tilt axis") such that tilting the tiltable part 4002 tilts the normal 4502 away from primary axis 4009.

The support 4002 supports a bracket 4037 provided around and enclosing the sensor 4020. The bracket 4037 is generally box-shaped and includes a top plate 4038 (or "top") having a central, circular aperture 4039. The top plate 4038, on its upper surface 4040, supports a lens carriage 4041.

The lens carriage 4041 is generally annular and holds lens assembly 4042. An autofocus system (not shown) and/or an (additional) OIS system may be provided between the lens assembly 4042 and the lens carriage 4041.

The top 4038 of the bracket 4037 has four corners including first and second opposite corners 4050₁, 4050₂. First respective ends of the second and third shape memory alloy wires 4010₂, 4010₃ are attached to the first corner 4050₁ of the top 4038 of the bracket 4037. A second end of the second shape memory alloy wire 4010₂ is attached to the first anchoring member 4026₁ and a second end of the third shape memory alloy wire 4010₃ is attached to the second anchoring member 4026₂. Similarly, first respective ends of the fourth and first shape memory alloy wires 4010₄, 4010₁ are attached to the second corner 4050₂ of the top 4038 of bracket 4037. A second end of the fourth shape memory alloy wire 4010₄ is attached to the second anchoring member 4026₂ and a second end of the first shape memory alloy wire 4010₁ is attached to the first anchoring member 4026₁.

Respective static crimps (not shown) are used to attach the respective first ends of the shape memory alloy wires 4010₁, 4010₂, 4010₃, 4010₄ to the anchoring members 4026₁, 4026₂. Respective moving crimps (not shown) are used to attach the respective second ends of the shape memory alloy wires 4010₁, 4010₂, 4010₃, 4010₄ to the corners 4050₁, 4050₂ of the top 4038 of bracket 4037.

Referring in particular to Figure 34, a shielding can 4043 is provided around the bearing arrangement 4003, second part 4004, SMA wires 4010₁, 4010₂, 4010₃, 4010₄ lens carriage 4041, lens assembly 4042. The can 4043 has a central, circular aperture 4044.

### - Movement -

Referring still to Figures 33 to 35, the third actuator assembly 4001 is able to provide OIS by tilting the second part 4004.

Different movements are caused by heating and cooling different combinations of the SMA wires 4010₁, 4010₂, 4010₃, 4010₄. As explained earlier, heating can be caused by driving a current through an SMA wire, which causes the SMA wire to contract.

A change in tilt about a diagonal (e.g., about the line Y = - X) is brought about by increasing the power to, and hence contracting, two adjacent wires, for example, fourth and first wires 4010₄, 4010₁ while decreasing the power to, and hence allowing expansion of, the other two wires, in this example, second and third wires 4010₂, 4010₂, thereby producing a force on the second part 4004, in this case along the line Y = X.

Suitable tilts can be produced as a linear combination of changes in diagonal tilts.

If the SMA wires 4010₁, 4010₂, 4010₃, 4010₄ lies A mm above the pivot point 4008 and have a stroke of ± B mm, then the actuator 4001 can produce tilt of ± sin(B/A). For example, when A = 1 mm and B = 0.09 mm (i.e., 90 µm), then tilt is about ±5°.

### Interchange of positions of the sensor and lens carriage

Referring to Figures 25, 29 and 34, in the examples hereinbefore described, the sensor 2020, 3020, 4020 is mounted on the first 2002, 3002, 4002, and the lens arrangement 2041, 2042, 3041, 3042, 4041, 4042 is mounted on the second part 2004, 3004, 4004. Expressed different, the sensor 2020, 3020, 4020 is tilted and with it the lens arrangement 2041, 2042, 3041, 3042, 4041, 4042 is also tilted.

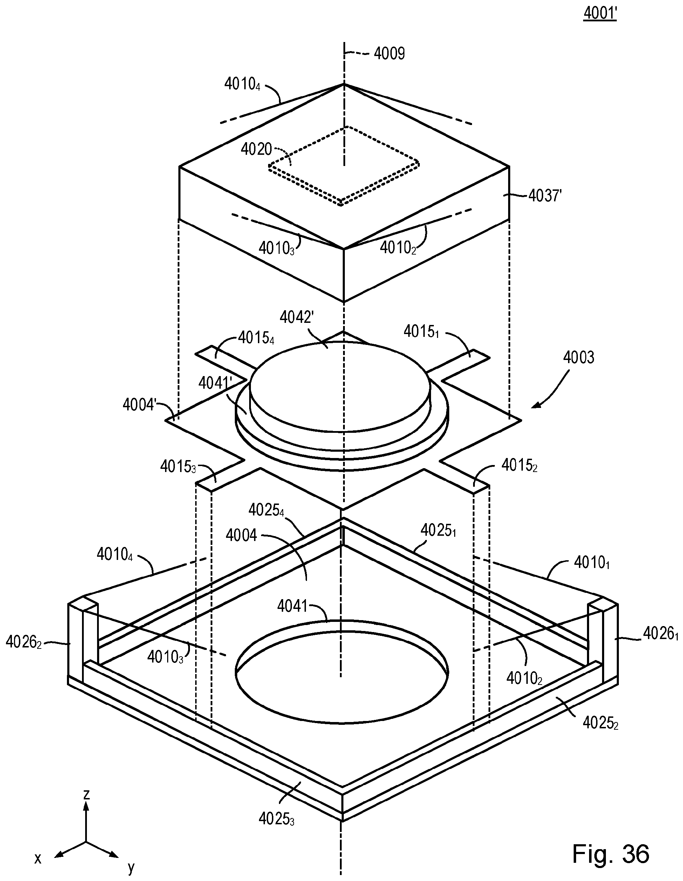

Referring to Figure 36, using another variant 4001' of the third actuator assembly as an example, the positions of the sensor 4020 and the lens arrangement 4041, 4042 can be swapped such that the lens arrangement 4041, 4042 is mounted on the second part 4004' and the sensor 4020 is mounted on the bracket 4037'. Again, expressed differently, the lens arrangement 4041, 4042 is tilted and with it the sensor 4020 is also tilted.

In this arrangement, the first part 4002' is provided with an aperture 4041 through which light can pass and a suitable first bearing 4003 is used, for example, in the form of a gimbal, which can hold the lens carriage 4041' and which can allow light to pass through the lens assembly 4042' towards the sensor 4020. The gimbal 4003 may be supported on and fixed to raised edges 4025₁, 4025₂, 4025₃, 4025₄ upstanding form the first part 4002' of the assembly.

The other actuator assemblies hereinbefore described can be modified in a similar way.

Although actuator assemblies 2001, 3001, 4001 and variants thereof have been described as including bearing arrangements 2003, 3003, 4003 in the form of pivot bearings 2021, 3021, 4021, the bearing arrangements 2003, 3003, 4003 are not restricted to pivot bearings 2021, 3021, 4021. For example, any of the actuator assemblies 2001, 3001, 4001 (and variants thereof) described hereinbefore may be modified to use a bearing arrangement 2003, 3003, 4003 taking the form of a gimbal bearing, for example the first, second or third gimbal bearings 1071, 1077, 1103, or to use a bearing arrangement 2003, 3003, 4003 taking the form of a tilting rolling bearing, for example the first, second or third tilting rolling bearings 1112, 1119, 1123.

### Electrical connection routing

In the actuator assemblies 2001, 3001, 4001 (and variants thereof) described hereinbefore, an image sensor 2020, 3020, 4020 is mounted to the tiltable part 2004, 3004, 4004. Additionally, an AF system may be coupled between a lens carriage 2041, 3041, 4041 and a lens assembly 2042, 3042, 4042. Consequently, connection of electrical connectors for signals and/or electrical power to parts mounted on the tiltable part 2004, 3004, 4004 is important to the functioning of the actuator assemblies 2001, 3001, 4001 (and variants thereof).

In some examples, electrical connections may be routed via flexures 2015, 3015, 4015 as described hereinbefore. However, if flexures 2015, 3015, 4015 are not used for routing electrical connections, or if flexures 2015, 3015, 4015 cannot support all necessary electrical connections, then one or more flexible electrical connectors may be connected to parts supported on the second part 2004, 3004, 4004.

Care must be taken to ensure that such flexible electrical connections do not directly impede (physically block) the tilting of the second part 2004, 3004, 4004, relative to the first part 2002, 3002, 4002. Care should also be taken to ensure that the mechanical properties of such flexible electrical connections, e.g. the flexural rigidity of the electrical connections, does not unduly influence or disturb the driving of tilting, for example by adding too much asymmetry to the driving requirements. Finally, any extra volume due to the inclusion of such flexible electrical connections should preferably be minimised.

### - Fourth actuator assembly -

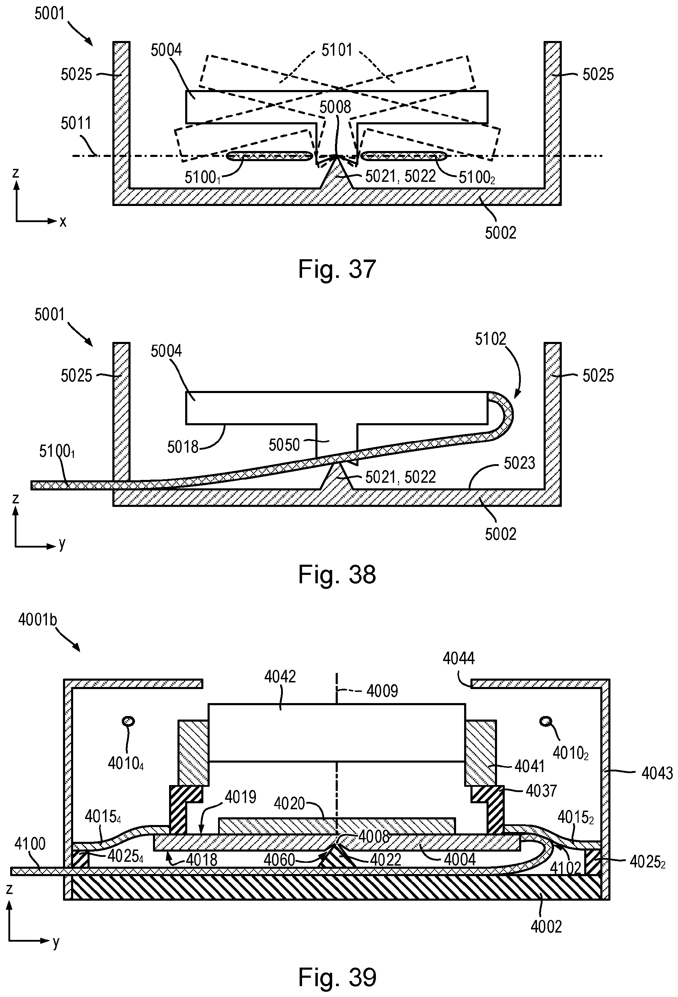

Referring also to Figures 37 and 38, a fourth actuator assembly 5001 is shown. Figure 37 is a cross-section through a centre of the fourth actuator assembly 5001 in a first plane (x-z as drawn), and Figure 38 is a partial cross-section and side view in a second plane (y-z as drawn) offset from the pivot point 5008 of the fourth actuator assembly 5001 and perpendicular to the first plane (x-z as drawn).

The fourth actuator assembly 5001 is not shown or described to the same level of detail as the first to third actuator assemblies 2001, 3001, 4001 (and variants thereof), and may be viewed as a potential modification of the first to third actuator assemblies 2001, 3001, 4001 (and variants thereof).

The fourth actuator assembly 5001 includes a first part 5002 and a second part 5004 which is configured with a downwardly depending axial member 5050 (or stud) as described hereinbefore in relation to Figure 32. A pivot point 5008 is formed where the depending axial member 5050 contacts a protrusion 5022 of a pivot bearing 5021. First and second axes 5011, 5012 pass through the pivot point 5008. A drive system 5005 (not shown), for example including four lengths of shape memory allow wires 5010₁, 5010₂, 5010₃, 5010₄ (not shown) couples the second part 5004 to a wall 5025 upstanding from the periphery of the first part 5002.

One or more flexible connectors 5100 extend from the second part 5004. The flexible connectors 5100 may take the form of single wires, bundles or wires twisted and/or braided together, or preferably, flexible printed circuit substrates. Each flexible connector 5100 may support one, two, or more separate conductors for passing signals and/or electrical power to parts mounted on the second part 5004 such as, for example, an image sensor 5020, an AF drive system and/or the lengths of shape memory allow wires 5010₁, 5010₂, 5010₃, 5010₄ (not shown).

In order for the second part 5004 to be tiltable relative to the first part 5002, there is necessarily a gap between first and second parts 5002, 5004. The second part 5003 may be tiltable to any angles within a range of motion defined by the maximum or extremal tilt angles 5101 which are obtainable. The maximum tilt angle in a particular direction may be limited by the second part 5004 coming into physical contact with the first part 5003, by the stroke of the shape memory allow wires 5010₁, 5010₂, 5010₃, 5010₄ (not shown), or a combination of the two around a periphery of the range of motion of the fourth actuator assembly 5001.

There exists a volume under the second part 5004 and above the first part 5002 through which electrical connectors 5100 may be routed so as to avoid interfering with the tilting of the second part 5004, whilst also avoiding the need to increase the footprint of the actuator 5001 in a plane parallel to first and second axes 5011, 5012 (alternatively perpendicular to the primary axis).

In the example shown in Figures 37 and 38, a pair of flexible electrical connectors 5100₁, 5100₂ extend away from the second part 5004 initially in a positive direction parallel to the y axis as drawn, before being bent back around through a bending region 5102 so as to pass back between the second part 5004 and the first part 5002. Specifically, the flexible electrical connectors 5100₁, 5100₂ span across below the lower face 5018 of the second part 5004 and above the upper face 5023 of the first part 5003.

In this way, flexible electrical connectors may be routed through a volume which is necessarily present for a tiltable actuator assembly, without increasing the x-y footprint or physically impeding the tilting of the second part 5002.

In some examples, the flexible electrical connectors 5100₁, 5100₂ extend from an edge of the second part 5004.

In some examples, the flexible electrical connectors 5100₁, 5100₂ extend from a lower face of the second part 5004. In such examples, the flexible electrical connectors 5100₁, 5100₂ may generally extend in a single direction when viewed along the primary axis z, e.g. in a negative direction parallel to the y axis (cf. Fig. 38). More generally, in such examples, the normal(s) to a major surface (e.g. the upper surface) of the flexible electrical connectors 5100₁, 5100₂ may be at an acute angle to the primary axis z. Put differently, the flexible electrical connectors 5100₁, 5100₂ may not include a fold in which a normal to a major surface thereof is perpendicular to the primary axis z (cf. Fig. 38). This may apply to the entirety of the flexible electrical connectors 5100₁, 5100₂ or only to those portions in which the major surfaces of the flexible electrical connectors 5100₁, 5100₂ are not attached to any other part of the assembly 5001 (portions of the flexible electrical connectors 5100₁, 5100₂ that are connected e.g. to the first part 5002 or the second part 5004 may have such a fold).

Preferably, each of the flexible connectors 5100 is routed such that a neutral axis (in the context of beam bending) of that flexible connector 5100 passes through, or proximate to, the first axis 5011 and/or the second axis 5012. For example, the pair of flexible connectors 5100₁, 5100₂ shown in Figures 37 and 38 both pass through the first axis 5011, level with the pivot point 5008.

In this way, flexible connectors 5100 may be located so as to minimise the mechanical influence of the flexible connector 5100 flexural rigidity (beam stiffness) on tilting of the second part 5004 relative to the first part 5002 about the first and/or second axes 5011, 5012.

Proximate to may correspond to a minimum perpendicular distance of less than or equal to 1 mm, less than or equal to 0.5 mm, or less than or equal to 0.25 mm. a smaller distance is preferable, for example less than 0.25 mm. The minimum perpendicular distance refers to a distance between the neutral axis of a flexible connector 5100 and the first axis 5011 and/or the second axis 5012.

It is preferable that each flexible connector 5100 be routed so as to pass, with respect to the primary axis z, above the one or more lowest points of the envelope of motion of the second part 5004 relative to the first part 5002. This may correspond to the lowest point of an edge or a corner of the second part 5004 relative to the primary axis z.

The routing configuration of flexible connectors described in relation to the fourth actuator assembly 5001 is applicable to any of the previously described actuator assemblies 2001, 3001, 4001 (and variants thereof).

### - Modified third actuator assembly-

For example, referring also to Figure 39, a cross-section of a first modified third actuator assembly 4001b is shown.

The first modified third actuator assembly 4001b is the same as the third actuator assembly 4001, except that it further includes a flexible electrical connector 4100 which extends from the second part 4004 before being bent /wrapped back around through a bending region 4102 so as to pass back below the lower face 4018 of the second part 4004 and above the upper face 4013 of the first part 4002.

### - Electrical connection routing for generic tiltable camera modules -

The realisation that electrical connections may be routed through a volume between a second part which is tiltable relative to a first part is applicable to any such actuators, not just the actuator assemblies 2001, 3001, 4001, 5001 (and variants thereof) described hereinbefore.

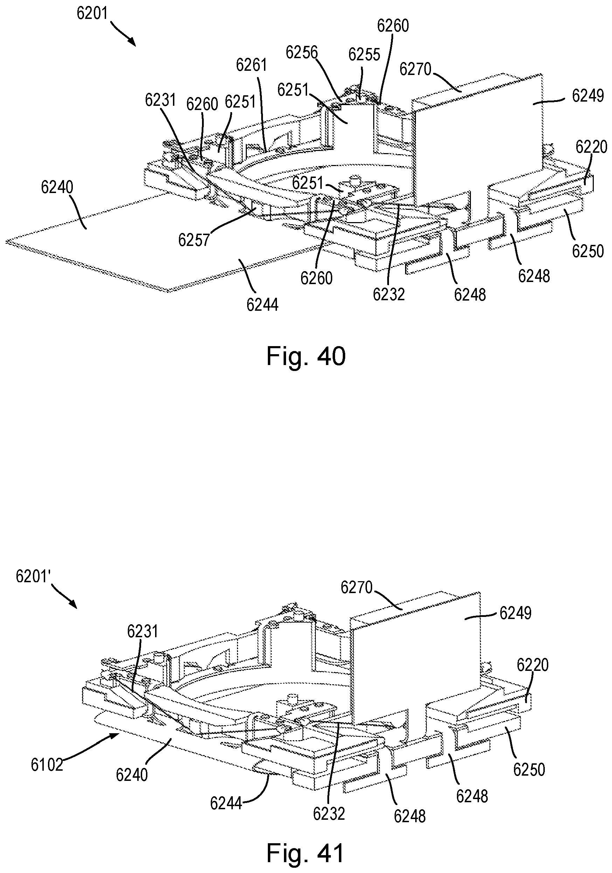

For example, Figure 40 shows a camera apparatus 6201 originally described in WO 2012/020212 A1 (see in particular Figures 7 to 9 and the description on page 17, line 19 to page 18, line 2). Figure 40 corresponds to Figure 9 of WO 2012/020212 A1.

The camera apparatus 6201 includes a chassis 6220 and a carriage plate 6250. The chassis 6220 is part of a support structure (not shown in Figure 40). The chassis 6220 is provided with four crimp mounts 6260 on its uppermost surface. The carriage plate 6250 is provided with four posts 6251 that protrude through a central aperture of the chassis 6220. Each post 6251 has an assembly mount 6255 and a crimp mount 6256 provided on its uppermost surface. The assembly mounts 6255 are for mounting a carriage assembly (not shown in Figure 40) which includes a lens system and may also include an AF actuator. An image sensor (not shown in Figure 40) is mounted and connected to a printed circuit board (PCB) (not shown in Figure 40) which is fixed to the lowermost surface of the carriage plate 6250 with the image sensor in a central aperture thereof. The chassis 6220 and the carriage plate 6250 may be moulded, for example from a plastic.

The camera apparatus 6201 includes four SMA wires 6231, 6232, 6233, 6234, each arranged on one of the four sides of the camera apparatus 6201, with an overall bowstring V-shape. Two of the SMA wires 6231 and 6232 are visible in Figure 40, whilst the other SMA wires 6233 and 6234 on the opposite sides of the camera apparatus 6201 are mirror images thereof in perpendicular planes through an optical axis (running through the aperture in the chassis 6220). A first pair of SMA wires 6231, 3623 are parallel to each other on opposite sides of the camera apparatus 6201 and extend perpendicular to a second pair of SMA wires 6232, 6234, which are also parallel to each other on opposite sides of the camera unit. The first pair of SMA wires 6231 and 6233 are each fixed, at each of their ends, by a crimping member (not shown in Figure 40) to the chassis 6220 and, intermediate their ends, hooked over pivot elements 6257 of the carriage plate 6250. The second pair of SMA wires 6232, 6234 are each fixed, at each of their ends, by a crimping member (not shown in Figure 40) to the carriage plate 6250 and, intermediate their ends, hooked over the pivot elements 6261 of the chassis 6220.

Differential contraction of the first pair of SMA wires 6231, 6233 drives rotation of a camera unit (not shown in Figure 40) supported on the carriage plate 6250 around a pivot axis that is defined by the pivot elements 6261 of the second pair of SMA wires 6232, 6234. Similarly, differential contraction of the second pair of SMA wires 6232, 6234 drives rotation of the camera unit (not shown in Figure 40) around a pivot axis that is defined by the pivot elements 6257 of the first SMA pair of SMA wires 6231, 6233. Due to the arrangement of the SMA wires 6231, 6232, 6233, 6234, these two pivot axes are perpendicular to each other and to the optical axis. Furthermore, the SMA wires 6231, 6232, 6233, 6234 are positioned with the pivot elements 6257, 6261 aligned along the optical axis, so that the two pivot axes lie in a common plane along the optical axis. The configuration of the SMA wires 6231, 6232, 6233, 6234 creates a desired virtual pivot for the camera unit mounted on the carriage 6250, without the need for any pivot or gimbal mechanism, by operating all the SMA wires 6231, 6232, 6233, 6234 with controlled drive signals. Hence, the actuator may be driven to provide tilting about any arbitrary notional axis perpendicular to the optical axis, by driving the first and second pairs of SMA wires 6231, 6232, 6233, 6234in combination.

The camera apparatus 6201 includes a flexible printed circuit (FPC) substrate 6240. The FPC substrate 6240 is formed from a sheet of non-conductive material and is connected between the carriage plate 6250 and the support structure. The FPC substrate 6240 is fixed to the upper surface of the carriage plate 6250. The FPC substrate 6240 includes two sensor tabs 6248 that are deformed over the edge of the of the carriage plate 6250 to extend down to the lower surface of the carriage plate 6250 to abut a PCB (not shown in Figure 40). Conductive tracks (not shown in Figure 40) extend across the sensor tabs 6248 to be connected to the PCB (not shown in Figure 40) for making an electrical connection to the image sensor (not shown in Figure 40). Via this electrical connection, signals are provided to power the image sensor (not shown in Figure 40), exchange information and transmit the image data. In this example, the FPC substrate 6240 also includes a gyroscope tab 6249 extending from the carriage plate 6250 similarly to the sensor tabs 6248, except that is deformed upwardly, outside and spaced from the edge of the of the chassis 6220. A gyroscope sensor 6270 is fixed to the gyroscope tab 6249.

The FPC substrate 6240 includes a body 6244, upon which an integrated circuit (IC) chip (43 in WO 2012/020212 A1) was supported in the examples described in WO 2012/020212 A1.

Referring also Figure 41, a modified camera apparatus 6201' may make use of the flexible electrical connector routing configuration described hereinbefore in relation to Figures 37 to 39.

Compared to the camera apparatus 6201 of WO 2012/020212 A1, the body 6244 of the FPC substrate 6240 is bent back through a bending region 6102 so as to pass beneath the modified camera apparatus 6201' for connection to control and/or power electronics (for example an IC chip).

Again, in some examples, the FPC substrate 6240 may extend from a lower face of the camera unit and may not have any such bend or fold.

### - Electrical connection routing using flexure arms -

The routing of electrical connections for power and/or data connections is not limited to flexible connectors in the form of flexible connectors 4100, 5100, FPC substrates 6240 and so forth. In other examples, flexible connectors may take the form of flexure arms which provide or support one or more conductors.

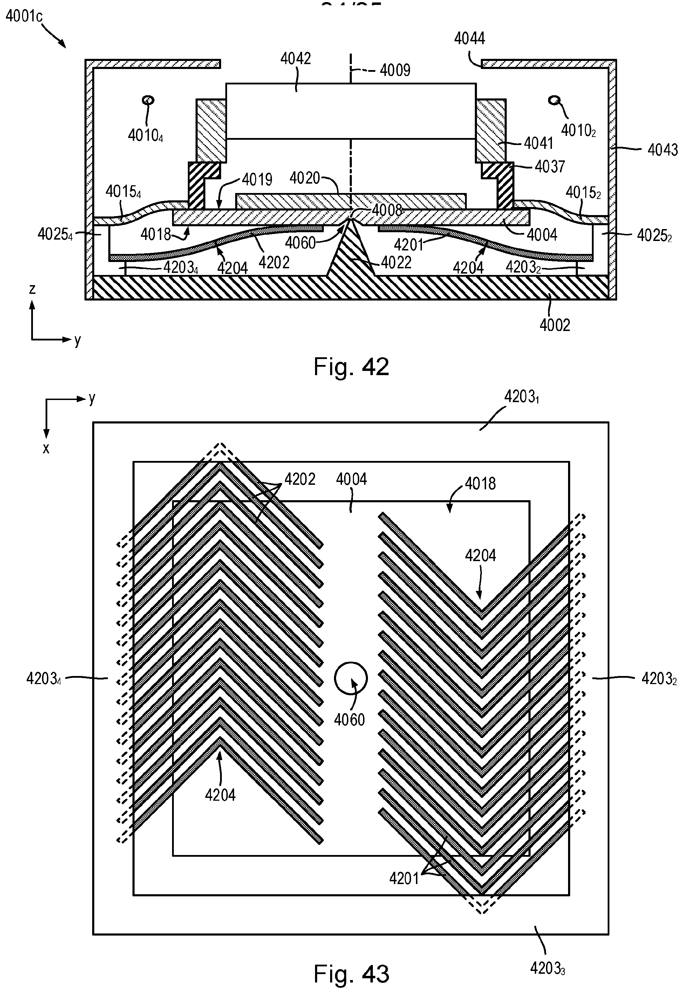

Referring also to Figure 42, a cross-section of a second modified third actuator assembly 4001c is shown.

The second modified third actuator assembly 4001c is the same as the third actuator assembly 4001, except that the electrical connections from the second (moving) part 4004 to the first (static) part 4002 are made using a series of first flexure arms 4201 and second flexure arms 4202, and that each raised edge 4025₁, 4025₂, 4025₃, 4025₄ includes a corresponding lip 4203₁, 4203₂, 4203₃, 4203₄.

Referring also to Figure 43, a plan view of the second part 4004, the lips 4203₁, 4203₂, 4203₃, 4203₄ and the first and second flexure arms 4201, 4202 of the second modified third actuator assembly 4001c is shown from below (relative to the illustrated z axis).

Each flexure arm 4201, 4202 includes a pair of straight sections which meet at an elbow (or corner) 4204. Each first flexure arm 4201 connects a conductive pad (not shown) of the second lip 4203₂ to a corresponding conductive pad (not shown) on the underside 4018 of the second part 4004. The first flexure arms 4201 are arranged in a linear array along the x axis as illustrated, with corresponding straight sections parallel to one another and all of the elbows pointing in the same direction (positive x as illustrated). Similarly, each second flexure arm 4202 connects a conductive pad (not shown) of the fourth lip 4203₄ to a corresponding conductive pad (not shown) on the underside 4018 of the second part 4004. The second flexure arms 4201 are arranged in a linear array along the x axis as illustrated, with their straight sections parallel to one another and all of the elbows pointing in the same direction (negative x as illustrated).

Electrical connections between the underside 4018 and the upper side 4019 of the second part 4004 may be made by routing conductors around the edges of the second part 4004 and/or through the thickness of the second part 4004. For example, the second part 4004 may include, or take the form of, a multi-layer PCB, and connections through the multi-layer PCB may be made using conventional methods such as vias.

Each flexure arm 4201, 4202 may be formed from a thin sheet or foil of metal. For example, a thin sheet of steel, or another suitable metal, may be etched or stamped to form the first and second flexure arms 4201, 4202. Either or both sets of flexure arms 4201, 4202 may optionally be attached to a removable frame to maintain the relative positions prior to attachment. Electrical connections of metal flexure arms 4201, 4202 to conductive pads at either end may be made using one or a combination of methods including, but not limited to, soldering, brazing, spot welding, anisotropic conductive adhesive layers, and so forth.

The flexure arms 4201, 4202 should have a thickness which, combined with their shapes including elbows 4204, provides the flexure arms 4201, 4202 with relatively high mechanical compliance (equivalently low stiffness). The flexure arms 4201, 4202 should have a mechanical compliance which is low enough that the mechanical influence of the flexure arms 4201, 4202 on tilting of the second part 4004 relative to the first part 4002 is negligible, or at least minimised.

The flexure arms 4201, 4202 may provide power and/or data connections to the image sensor 4020. Additionally or alternatively, the flexure arms 4201, 4202 may conduct currents to or from the SMA wires 4010₁, 4010₂, 4010₃, 4010₄. Optionally, any conductive tracks (not shown) which are supported on the underside 4018 and/or the upper side 4019 may be configured to follow the angled shapes of the flexure arms 4201, 4202 so as to minimise the current loop of any pulse width modulated (PWM) signal that is conducted by the flexure arms 4201, 4202 (e.g. signals powering the SMA wires 4010₁, 4010₂, 4010₃, 4010₄).

Instead of each flexure arm 4201, 4202 providing a single electrical connection, each flexure arm 4201, 4202 may support two or more electrical connections. For example, when flexure arms 4201, 4202 are formed from a metal or another conductor, a thin insulating layer (not shown) may be deposited or laminated over one surface, and conductive tracks (not shown) patterned over the thin insulating layer. Conductive tracks supported on a flexure arm may provide electrical connections for powering the image sensor 4020, reading data from the image sensor 4020, powering the SMA wires 4010₁. 4010₂, 4010₃, 4010₄, or a mixture of these functions.

Although illustrated as connecting from the lips 4203₁, 4203₂, 4203₃, 4203₄ to the underside 4018 of the second part 4004, the flexure arms 4201, 4202 may instead connect the underside 4018 of the second part 4004 directly to the upper side of the first part 4002, or any other structure disposed below the underside 4018 (relative to the z axis as illustrated). Preferably, each flexure arms 4201, 4202 is connected to the first part 4002 at a position outside the lateral extent of the second part 4004 when viewed along the primary axis z.

Although the flexure arms 4201, 4202 have been illustrated as having a pair of perpendicular straight sections connected by 90 degree elbows 4204, this shape is not essential. For example, the elbows 4204 may be formed with different angles, for example between 30 and 150 degrees. Alternatively, the flexure arms 4201, 4202 are not limited to two straight sections, and further sections may be included so that each flexure arm 4201, 4202 forms a zig-zag or serpentine shape. Equally, flexure arms 4201, 4202 are not limited to two or more straight sections connected at angles, and in other examples, curved flexure arms may be used. The only restrictions on the shapes, dimensions and materials used for the flexure arms 4201, 4202 is that they should not significantly interfere with the tilting of the second part 4004, and that they should provide, or support, conductive paths for electrical connection to the image sensor 4020 and/or SMA wires 4010.

Although sixteen first flexure arms 4021 and sixteen second flexure arms 4022 have been illustrated, any numbers may be used. Preferably the numbers will be balanced either side of the pivot point 4008. In practice the number of flexure arms 4201, 4202 may be determined by the number of electrical connections required between the first and second parts 4002, 4004. In some examples, the number of flexure arms 4201, 4202 may exceed the number of electrical connections required. In other words, some of the flexure arms 4201, 4202 may be unused or "dummy" connections. This may help with maintaining balance about the pivot point 4008.

The routing configuration using flexure arms 4201, 4202 described in relation to the second modified third actuator assembly 4001c is equally applicable to any of the previously described actuator assemblies 2001, 3001, 4001 (and variants thereof), or indeed any such actuators (not limited to the actuator assemblies 2001, 3001, 4001, 5001 (and variants thereof) described hereinbefore). For example the camera apparatus 6201 originally described in WO 2012/020212 A1 and discussed hereinbefore could be modified to use flexure arms 4201, 4202 instead of the FPC substrate 6240.

The configuration in two groups of flexure arms 4201, 4202 is exemplary only, and in other examples flexure arms may be disposed in three, four, five or more groups.

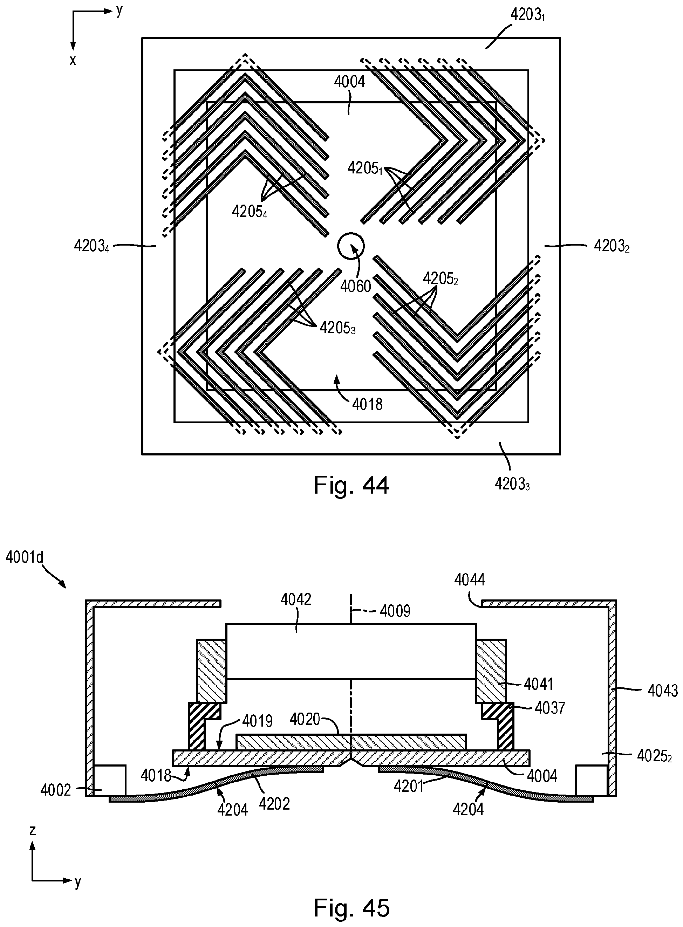

For example, referring also to Figure 44, an alternative layout of flexure arms 4205₁, 4205₂, 4205₃, 4205₄ is shown to that illustrated in Figure 43.

A first group of flexure arms 4205₁ connects the first lip 4203₁ to a first quadrant of the underside 4018 of the second part 4004, with the elbows 4204 pointing in the positive y direction as illustrated. Similarly, a second group of flexure arms 4205₂ connects the second lip 4203₂ to a second quadrant of the underside 4018 with the elbows 4204 pointing in the positive x direction as illustrated, a third group of flexure arms 4205₃ connects the third lip 4203₃ to a third quadrant of the underside 4018 with the elbows 4204 pointing in the negative y direction as illustrated, and a fourth group of flexure arms 4205₄ connects the fourth lip 4203₄ to a fourth quadrant of the underside 4018 with the elbows 4204 pointing in the negative x direction as illustrated. In this way, the groups of flexure arms 4205₁, 4205₂, 4205₃, 4205₄ substantially possess four-fold rotational symmetry about the pivot point 4008. Alternatively, more or fewer groups of flexure arms 4205 may be used, arranged with any order of rotational symmetry, or non-rotational symmetries, which may help maintain balance about the pivot point 4008. Equally, symmetry (of any sort) of the flexure arms is not a requirement.

Referring also to Figure 43, a cross-section of a third modified third actuator assembly 4001d is shown. This actuator assembly is similar to the second modified third actuator assembly 4001c except that the flexure arms 4201, 4202 are connected to a lower face of the first part 4002, which has an annular form. As illustrated, the first part 4002 overlaps with second part 4004 along the primary axis z. The flexure arms 4201, 4202 pass below the image sensor 4020 with respect to the primary axis z. The first modified third actuator assembly 4001b or the fourth actuator assembly 5001 may have a similar arrangement of first and second parts 4002, 4004 and flexible electrical connectors. The third modified third actuator assembly 4001d may include any of the drive arrangements and bearing arrangements referred to herein.

The routing of electrical connections as described above in relation to the modified third actuator assemblies 4001b, 4001c, 4001d, the fourth actuator assembly 5001 and the modified camera apparatus 6201' can also be applied to actuators as described in WO 2011/104518 A1. In such actuators, eight SMA wires are arranged inclined with respect to a primary axis, with a pair of SMA wires on each of four sides around the primary axis. The SMA wires are connected so that on contraction two groups of four SMA wires provide a force with a component in opposite directions along the primary axis, so that the groups are capable of providing movement along the primary axis. The SMA wires of each group have twofold rotational symmetry about the primary axis, and there are SMA wires opposing each other that are capable of providing lateral movement or tilting.

### Modifications

It will be appreciated that there may be many other variations of the above-described embodiments.

For example, different SMA drive assemblies and different bearings hereinbefore can be suitably used in the actuator assemblies hereinbefore described.

In the description hereinbefore, parts have been described as rectangular, and this should be interpreted as encompassing square shapes. In the description hereinbefore, parts have been described as circular, and this should be interpreted as encompassing elliptical shapes.

The first to fourth SMA wires have been described and shown as directly connecting the first and second parts. However, in some examples the first to fourth SMA wires may indirectly connect the first and second parts, for example via one or more intermediate structures (not shown). Intermediate structures (not shown) may be configured to help extend the stroke of one or more SMA wires.

The actuator assembly may be any type of assembly that comprises a first part and a second part movable with respect to the first part. The actuator assembly may be, or may be provided in, any one of the following devices: a smartphone, a protective cover or case for a smartphone, a functional cover or case for a smartphone or electronic device, a camera, a foldable smartphone, a foldable smartphone camera, a foldable consumer electronics device, a camera with folded optics, an image capture device, an array camera, a 3D sensing device or system, a servomotor, a consumer electronic device, a mobile or portable computing device, a mobile or portable electronic device, a laptop, a tablet computing device, an e-reader, a computing accessory or computing peripheral device, an audio device, a security system, a gaming system, a gaming accessory, a robot or robotics device, a medical device, an augmented reality system, an augmented reality device, a virtual reality system, a virtual reality device, a wearable device, a drone, an aircraft, a spacecraft, a submersible vessel, a vehicle, and an autonomous vehicle, a tool, a surgical tool, a remote controller, clothing, a switch, dial or button, a display screen, a touchscreen, a flexible surface, and a wireless communication device. It will be understood that this is a non-exhaustive list of example devices.

## Claims

1. A camera assembly (5001) comprising:
a first part (5002);
a second part (5004) tiltable with respect to the first part (5002), the second part (5004) including an image sensor and a lens system, wherein the lens system is above the image sensor with respect to a primary axis passing through the image sensor;
a drive system configured, in response to drive signals, to cause tilting of the second part (5004) with respect to the first part (5002), wherein the tilting is about first and/or second axes (5011, 5012) which are not parallel and which are perpendicular to the primary axis; and
one or more flexible connectors (5100) operatively connected to the second part (5004), wherein the one or more flexible connectors (5100) are routed to pass between the second part (5004) and the first part (5002) below the image sensor with respect to the primary axis;
wherein each flexible connector (5100) is routed so as to pass, with respect the primary axis, at least partly above one or more lowest points of an envelope of motion of the second part (5004) relative to the first part (5002); and
wherein the one or more lowest points of the envelope of motion of the second part (5004) are at one or more corners thereof,
**characterized in that**,
when viewed along the primary axis, the flexible connector (5100) does not occupy corner regions of the second part (5004).

2. The camera assembly (5001) of claim 1, wherein a neutral axis of each flexible connector (5100) passes through, or proximate to, the first axis (5011) and/or the second axis (5012).

3. The camera assembly of claim 1 or 2 wherein, for at least a portion of each flexible connector (5100), the normal(s) to a major surface of the flexible connector (5100) are at an acute angle to the primary axis.

4. The camera assembly (5001) of any preceding claim wherein, for at least a portion of each flexible connector (5100), the flexible connector (5100) does not include a fold in which a normal to a major surface thereof is perpendicular to the primary axis.

5. The camera assembly (5001) according to claim 3 or 4 wherein the portion corresponds to the portion of the flexible connector (5100) in which the major surfaces thereof are not attached to any other part of the camera assembly (5001).

6. The camera assembly (5001) of any one of claims 1 to 4, wherein the second part (5004) comprises a first face and a second face opposite to the first face, and wherein the image sensor is on the first face;
wherein each flexible connector (5100) extends from the second part (5004) in a first direction and curves around to span across the second face in a second direction which is substantially opposite to the first direction.

7. The camera assembly (5001) of any preceding claim, wherein each flexible connector (5100) is connected to the first part (5002) at a position outside the lateral extent of the second part (5004) when viewed along the primary axis.

8. The camera assembly vof any preceding claim, wherein the lens system further comprises:
a lens carriage;
a lens arrangement comprising at least one lens; and
an autofocussing system mechanically coupling the lens arrangement and the lens carriages to move the lens arrangement relative to the sensor.

## Patentansprüche

1. Kamerabaugruppe (5001), die umfasst:
einen ersten Teil (5002);
einen zweiten Teil (5004), der in Bezug auf den ersten Teil (5002) neigbar ist, wobei der zweite Teil (5004) einen Bildsensor und ein Objektivsystem beinhaltet, wobei das Objektivsystem in Bezug auf eine durch den Bildsensor verlaufende Hauptachse oberhalb des Bildsensors ist;
ein Antriebssystem, das dazu konfiguriert ist, als Reaktion auf Antriebssignale eine Neigung des zweiten Teils (5004) in Bezug auf den ersten Teil (5002) zu bewirken, wobei die Neigung um eine erste und/oder zweite Achse (5011, 5012) erfolgt, die nicht parallel zueinander sind und senkrecht zu der Hauptachse sind; und
ein oder mehrere flexible Verbinder (5100), die betriebsfähig mit dem zweiten Teil (5004) verbunden sind, wobei der eine oder die mehreren flexiblen Verbinder (5100) geleitet sind, um zwischen dem zweiten Teil (5004) und dem ersten Teil (5002) unterhalb des Bildsensors in Bezug auf die Hauptachse zu verlaufen;
wobei jeder flexible Verbinder (5100) geleitet ist, um in Bezug auf die Hauptachse wenigstens teilweise über einem oder mehreren tiefsten Punkten einer Bewegungshülle des zweiten Teils (5004) relativ zu dem ersten Teil (5002) zu verlaufen; und
wobei der eine oder die mehreren tiefsten Punkte der Bewegungshülle des zweiten Teils (5004) an einer oder mehreren Ecken davon sind,
**dadurch gekennzeichnet, dass**, bei Betrachtung entlang der Hauptachse der flexible Verbinder (5100) keine Eckbereiche des zweiten Teils (5004) einnimmt.

2. Kamerabaugruppe (5001) nach Anspruch 1, wobei eine Neutralachse jedes flexiblen Verbinders (5100) durch die erste Achse (5011) und/oder die zweite Achse (5012) verläuft oder sich in der Nähe von diesen befindet.

3. Kamerabaugruppe nach Anspruch 1 oder 2, wobei für wenigstens einen Abschnitt jedes flexiblen Verbinders (5100) die Normale(n) zu einer Hauptoberfläche des flexiblen Verbinders (5100) in einem spitzen Winkel zu der Hauptachse steht/stehen.

4. Kamerabaugruppe (5001) nach einem der vorstehenden Ansprüche, wobei für wenigstens einen Abschnitt jedes flexiblen Verbinders (5100) der flexible Verbinder (5100) keine Falte beinhaltet, bei der eine Normale zu einer Hauptoberfläche davon senkrecht zu der Hauptachse ist.

5. Kamerabaugruppe (5001) nach Anspruch 3 oder 4, wobei der Abschnitt dem Abschnitt des flexiblen Verbinders (5100) entspricht, in dem die Hauptoberflächen davon nicht an einem anderen Teil der Kamerabaugruppe (5001) befestigt sind.

6. Kamerabaugruppe (5001) nach einem der Ansprüche 1 bis 4, wobei der zweite Teil (5004) eine erste Fläche und eine der ersten Fläche gegenüberliegende zweite Fläche umfasst und wobei der Bildsensor auf der ersten Fläche ist;
wobei sich jeder flexible Verbinder (5100) von dem zweiten Teil (5004) in einer ersten Richtung erstreckt und sich um die zweite Fläche herum biegt, um die zweite Fläche in einer zweiten Richtung zu überspannen, die im Wesentlichen der ersten Richtung gegenüberliegt.

7. Kamerabaugruppe (5001) nach einem der vorstehenden Ansprüche, wobei jeder flexible Verbinder (5100) an einer Position außerhalb der seitlichen Ausdehnung des zweiten Teils (5004) bei Betrachtung entlang der Hauptachse mit dem ersten Teil (5002) verbunden ist.

8. Kamerabaugruppe nach einem der vorstehenden Ansprüche, wobei das Objektivsystem ferner umfasst:
einen Objektivschlitten;
eine Objektivanordnung, die wenigstens eine Objektiv umfasst; und
ein Autofokussystem, das die Objektivanordnung und den Objektivschlitten mechanisch koppelt, um die Objektivanordnung relativ zu dem Sensor zu bewegen.

## Revendications

1. Ensemble caméra (5001) comprenant :
une première partie (5002),
une deuxième partie (5004) pouvant basculer par rapport à la première partie (5002), la deuxième partie (5004) comprenant un capteur d'image et un système d'objectif, le système d'objectif étant situé au-dessus du capteur d'image par rapport à un axe principal traversant le capteur d'image,
un système d'actionnement conçu, en réponse à des signaux d'actionnement, pour entraîner l'inclinaison de la deuxième partie (5004) par rapport à la première partie (5002), l'inclinaison s'effectuant sur un premier et/ou un deuxième axe (5011, 5012) qui ne sont pas parallèles et qui sont perpendiculaires à l'axe principal, et
un ou plusieurs connecteurs flexibles (5100) raccordés de manière fonctionnelle à la deuxième partie (5004), le ou les connecteurs flexibles (5100) étant agencés en passant entre la deuxième partie (5004) et la première partie (5002) en dessous du capteur d'image par rapport à l'axe principal ;
chaque connecteur flexible (5100) étant agencé en passant, par rapport à l'axe principal, au moins partiellement au-dessus d'un ou plusieurs points les plus bas d'une enveloppe de déplacement de la deuxième partie (5004) par rapport à la première partie (5002), et
le ou les points les plus bas de l'enveloppe de déplacement de la deuxième partie (5004) se situant au niveau d'un ou de plusieurs angles de celle-ci ;
**caractérisé en ce que**, vu le long de l'axe principal, le connecteur flexible (5100) ne pénètre pas dans des régions d'angle de la deuxième partie (5004).

2. Ensemble caméra (5001) selon la revendication 1, dans lequel un axe neutre de chaque connecteur flexible (5100) traverse ou est proche du premier axe (5011) et/ou du deuxième axe (5012).

3. Ensemble caméra selon la revendication 1 ou 2, dans lequel, pour au moins une portion de chaque connecteur flexible (5100), la ou les normales à une surface majeure du connecteur flexible (5100) forment un angle aigu avec l'axe principal.

4. Ensemble caméra (5001) selon l'une quelconque des revendications précédentes, dans lequel, pour au moins une portion de chaque connecteur flexible (5100), le connecteur flexible (5100) ne comprend pas de pli dans lequel une normale à une surface majeure de celui-ci est perpendiculaire à l'axe principal.

5. Ensemble caméra (5001) selon la revendication 3 ou 4, dans lequel la portion correspond à la portion du connecteur flexible (5100) dans laquelle les surfaces majeures de celui-ci ne sont fixées à aucune autre partie de l'ensemble caméra (5001).

6. Ensemble caméra (5001) selon l'une quelconque des revendications 1 à 4, dans lequel la deuxième partie (5004) comprend une première face et une deuxième face opposée à la première face, et le capteur d'image est situé sur la première face ;
chaque connecteur flexible (5100) s'étendant à partir de la deuxième partie (5004) dans une première direction et s'incurvant pour passer d'un côté à l'autre de la deuxième face dans une deuxième direction qui est sensiblement opposée à la première direction.

7. Ensemble caméra (5001) selon l'une quelconque des revendications précédentes, dans lequel chaque connecteur flexible (5100) est raccordé à la première partie (5002) en un emplacement situé à l'extérieur de l'étendue latérale de la deuxième partie (5004), vu le long de l'axe principal.

8. Ensemble caméra selon l'une quelconque des revendications précédentes, dans lequel le système d'objectif comprend en outre :
un support de lentilles,
un agencement de lentilles comprenant au moins une lentille, et
un système de mise au point automatique couplant mécaniquement l'agencement de lentilles et le support de lentilles afin de déplacer l'agencement de lentilles par rapport au capteur.
